(19) 

Europäisches
Patentamt
European
Patent Office
Office européen
des brevets

(11) **EP 4 576 691 A1**

(12) **EUROPEAN PATENT APPLICATION**
published in accordance with Art. 153(4) EPC

(43) Date of publication:
**25.06.2025 Bulletin 2025/26**

(21) Application number: **22959014.6**

(22) Date of filing: **20.09.2022**

(51) International Patent Classification (IPC):
***H04L 27/00*** *(2006.01)*

(52) Cooperative Patent Classification (CPC):
**H04L 27/00**

(86) International application number:
**PCT/CN2022/119814**

(87) International publication number:
**WO 2024/060002 (28.03.2024 Gazette 2024/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventors:
• **ZHANG, Gongzheng
Shenzhen, Guangdong 518129 (CN)**
• **XU, Chen
Shenzhen, Guangdong 518129 (CN)**
• **LI, Rong
Shenzhen, Guangdong 518129 (CN)**

(74) Representative: **Epping - Hermann - Fischer
Patentanwaltsgesellschaft mbH
Schloßschmidstraße 5
80639 München (DE)**

(54) **COMMUNICATION METHOD AND RELATED DEVICE**

(57)     Embodiments of this application provide a communication method and a related apparatus, to reduce communication overheads for reporting related information of a first model by a first apparatus, and save communication resources. The method provided in this application includes: A first apparatus receives at least one quantization threshold from a second apparatus; the first apparatus performs quantization on related information of a first model of the first apparatus based on the at least one quantization threshold; and the first apparatus sends first information to the second apparatus, where the first information indicates quantized related information of the first model.

FIG. 2

**Description**

**TECHNICAL FIELD**

This application relates to the field of communication technologies, and in particular, to a communication method and a related apparatus.

**BACKGROUND**

Distributed learning is a learning method for implementing collaborative learning. Specifically, a plurality of node devices obtain local models through training based on local data, and a central node device fuses the plurality of local models, to obtain a global model. In this way, collaborative learning is implemented on a premise that privacy of user data of the node devices is protected.

The plurality of node devices may respectively train their local models, to obtain related parameters of the local models, for example, weight parameters or weight gradients of the local models. Then, the plurality of node devices send the related parameters of the local models to the central node device. The central node device fuses the related parameters of the local models sent by the plurality of node devices, to obtain a related parameter of the global model, and delivers the related parameter to the node devices. The node devices may update the local models of the node devices based on the related parameter of the global model.

It can be learned from the foregoing technical solution that the node devices respectively send the related parameters of the local models to the central node device, resulting in a large amount of data reported by the node device and large communication overheads. Therefore, how the node devices report the related parameters of the local models with low communication overheads is an urgent problem to be resolved.

**SUMMARY**

Embodiments of this application provide a communication method and a related apparatus, to reduce communication overheads for reporting related information of a first model by a first apparatus, and reduce system overheads.

A first aspect of this application provides a communication method. The communication method may be performed by a first apparatus. The first apparatus may be a communication device, or may be a component (for example, a chip (system)) in the communication device. The communication method includes:

A first apparatus receives at least one quantization threshold from a second apparatus. Then, the first apparatus performs quantization on related information of a first model of the first apparatus based on the at least one quantization threshold. The first apparatus sends first information to the second apparatus, where the first information indicates quantized related information of the first model. This reduces communication overheads for reporting the related information of the first model by the first apparatus, and saves communication resources.

Based on the first aspect, in a possible implementation, the related information of the first model includes an output parameter or an update parameter of the first model, and the update parameter includes a weight gradient or a weight parameter of the first model. In this implementation, two possible parameters included in the related information of the first model are shown, so that the second apparatus fuses training results reported by all apparatuses, to obtain related information of a global model. In this application, models on all apparatuses may be understood as a same model. To distinguish between models on different apparatuses, on a first apparatus side, the model may be referred to as the first model, and on a second apparatus side, the model may be referred to as the global model.

Based on the first aspect, in a possible implementation, before the first apparatus receives the at least one quantization threshold from the second apparatus, the method further includes: The first apparatus sends second information to the second apparatus, where the second information indicates information obtained by processing the related information of the first model, or the second information indicates information obtained by processing related information obtained by performing an $M^{th}$ round of training on the first model by the first apparatus, and the related information of the first model is related information obtained by performing a $Q^{th}$ round of training on the first model by the first apparatus, where M is an integer greater than or equal to 1 and less than Q, and Q is an integer greater than 1.

In this implementation, the first apparatus may send the second information to the second apparatus, so that the second apparatus determines the at least one quantization threshold. This helps the second apparatus determine an appropriate quantization threshold, and helps the first apparatus perform proper quantization on the related information of the first model, thereby reducing overheads for reporting the related information of the first model by the first apparatus while ensuring precision of the related information of the first model reported by the first apparatus.

Based on the first aspect, in a possible implementation, the related information of the first model includes the output parameter of the first model, and the information obtained by processing the related information of the first model includes an average value of absolute values of values of output parameters of the first model, or the related information of the first model includes the update parameter of the first model, and the information obtained by processing the related information of the first model includes an average value of absolute values of values of update parameters of the first model. In this implementation, two possible implementations of the related information of the first model are shown. The first apparatus may report the average value of the absolute values of the values of the output parameters of the first model or the average value of the absolute values of the values of the update parameters of the first model to the second apparatus. This helps the second apparatus determine the appropriate quantization threshold.

Based on the first aspect, in a possible implementation, the method further includes: The first apparatus receives third information from the second apparatus, where the third information indicates global information of the first model. In this implementation, the first apparatus may update or train the first model based on the global information of the first model.

Based on the first aspect, in a possible implementation, the global information of the first model includes a global output parameter of the first model, or the global information of the first model includes a global update parameter and/or a global learning rate of the first model.

In this implementation, two implementations of the global information of the first model are shown. For example, the global information of the first model includes the global output parameter of the first model, so that the first apparatus trains the first model based on the global output parameter. This helps improve training performance of the first model and improve accuracy of the first model. For example, the global information of the first model includes the global update parameter and/or the global learning rate of the first model, so that the first apparatus updates the first model based on the global update parameter and/or the global learning rate. This helps improve accuracy of the first model.

Based on the first aspect, in a possible implementation, the related information of the first model includes N parameters of the first model, and N is an integer greater than or equal to 1. That the first apparatus performs quantization on related information of a first model of the first apparatus based on the at least one quantization threshold includes: The first apparatus performs quantization on the N parameters based on the at least one quantization threshold, to obtain N quantized parameters. The first information includes the N quantized parameters. That the first apparatus sends first information to the second apparatus includes: The first apparatus modulates the N quantized parameters, to obtain N first signals; and the first apparatus sends the N first signals to the second apparatus.

In this implementation, the first information includes the N quantized parameters. The first apparatus may perform quantization on the N parameters of the first model, modulate the N quantized parameters, and then send the N first signals obtained through modulation, thereby sending the first information.

Based on the first aspect, in a possible implementation, the at least one quantization threshold includes a first quantization threshold and a second quantization threshold. That the first apparatus performs quantization on the N parameters based on the at least one quantization threshold, to obtain N quantized parameters includes: If an $i^{th}$ parameter in the N parameters is greater than the first quantization threshold, the first apparatus quantizes the $i^{th}$ parameter to a first value, where i is an integer greater than or equal to 1 and less than or equal to N; or if an $i^{th}$ parameter in the N parameters is less than or equal to the first quantization threshold and is greater than or equal to the second quantization threshold, the first apparatus quantizes the $i^{th}$ parameter to a second value; or if an $i^{th}$ parameter in the N parameters is less than the second quantization threshold, the first apparatus quantizes the $i^{th}$ parameter to a third value. In this implementation, a specific quantization process in which the first apparatus quantizes the $i^{th}$ parameter is shown, to facilitate implementation of this solution. Further, the at least one quantization threshold includes a plurality of quantization thresholds, so that precision of quantizing the parameter of the first model by the first apparatus is finer. This helps improve accuracy of updating the first model by the first apparatus and improve training performance of the first model.

Based on the first aspect, in a possible implementation, that the first apparatus modulates the N quantized parameters, to obtain N first signals includes: The first apparatus modulates an $i^{th}$ quantized parameter, to obtain an $i^{th}$ first signal, where the $i^{th}$ first signal corresponds to two sequences. When the $i^{th}$ quantized parameter is the first value, a transmit power at which the first apparatus sends a $1^{st}$ sequence in the two sequences is less than a transmit power at which the first apparatus sends a $2^{nd}$ sequence in the two sequences; when the $i^{th}$ quantized parameter is the second value, a transmit power at which the first apparatus sends a $1^{st}$ sequence in the two sequences is equal to a transmit power at which the first apparatus sends a $2^{nd}$ sequence in the two sequences; or when the $i^{th}$ quantized parameter is the third value, a transmit power at which the first apparatus sends a $1^{st}$ sequence in the two sequences is greater than a transmit power at which the first apparatus sends a $2^{nd}$ sequence in the two sequences.

In this implementation, the first apparatus modulates each of the N parameters of the first model to two sequences. The first apparatus controls a transmit power used to send each of the two sequences, so that the second apparatus determines a value of the parameter. The first apparatus does not need to perform channel estimation and equalization, so that corresponding pilot overheads are not required.

Based on the first aspect, in a possible implementation, when the $i^{th}$ quantized parameter is the first value, the $1^{st}$ sequence in the two sequences is a non-all-0 sequence, and the $2^{nd}$ sequence is an all-0 sequence, when the $i^{th}$ quantized parameter is the second value, the two sequences are both all-0 sequences; or when the $i^{th}$ quantized parameter is the third value, the $1^{st}$ sequence in the two sequences is an all-0 sequence, and the $2^{nd}$ sequence is a non-all-0 sequence. In this implementation, the first apparatus may use the all-0 sequence and/or the non-all-0 sequence to carry the $i^{th}$ quantized parameter. At a same total transmit power, this helps the second apparatus identify a value of the $i^{th}$ quantized parameter, thereby improving power utilization efficiency.

Based on the first aspect, in a possible implementation, that the first apparatus sends first information to the second apparatus includes:

The first apparatus sends the first information to the second apparatus L times, where L is an integer greater than or equal to 1. In this implementation, when the quantity L of sending times is greater than 1, the first apparatus repeatedly sends the first information. This helps the second apparatus select a decision result with a largest quantity of occurrences as a best decision result after separately making decisions, thereby reducing a probability of a decision error, and improving model training performance.

Based on the first aspect, in a possible implementation, the method further includes: The first apparatus receives first indication information from the second apparatus, where the first indication information indicates the quantity L of sending times that the first apparatus sends the first information to the second apparatus. In this implementation, the first apparatus may receive the quantity of sending times indicated by the second apparatus, and send the first information based on the quantity of sending times. This helps the second apparatus determine the quantity of sending times based on an actual requirement, thereby properly utilizing communication resources.

Based on the first aspect, in a possible implementation, the related information of the first model includes N parameters of the first model that are obtained through quantization error compensation, the N parameters obtained through quantization error compensation are obtained by performing error compensation for the N parameters by the first apparatus based on quantization errors respectively corresponding to the N parameters obtained by performing the $Q^{th}$ round of training on the first model by the first apparatus, and a quantization error corresponding to the $i^{th}$ parameter in the N parameters is determined based on an $i^{th}$ parameter obtained by performing a $(Q-1)^{th}$ round of training on the first model and performing quantization error compensation by the first apparatus, where i is an integer greater than or equal to 1 and less than or equal to N, N is an integer greater than or equal to 1, and Q is an integer greater than 1.

In this implementation, the first apparatus may first perform quantization error compensation for the N parameters of the first model, and then perform, based on the at least one quantization threshold, quantization on the N parameters obtained through quantization error compensation. This helps improve the accuracy of updating the first model by the first apparatus and improve the training performance of the first model.

Based on the first aspect, in a possible implementation, the related information of the first model includes N parameters of the first model that are obtained through sparsification, the N parameters of the first model that are obtained through sparsification are the N parameters selected by the first apparatus from K parameters of the first model based on a common sparse mask, and the K parameters of the first model are parameters obtained by performing one round of training on the first model by the first apparatus, where K is an integer greater than or equal to N, K is an integer greater than or equal to 1, and N is an integer greater than or equal to 1.

In this implementation, the first apparatus may first select the N parameters from the K parameters of the first model based on the common sparse mask, and then perform quantization on the N parameters based on the at least one quantization threshold. This helps reduce overheads generated when the first apparatus reports the parameter of the first model.

Based on the first aspect, in a possible implementation, the common sparse mask is a bit sequence, the bit sequence includes K bits, and the K bits one-to-one correspond to the K parameters. When a value of one bit in the K bits is 0, it indicates the first apparatus not to select a parameter corresponding to the bit; or when a value of one bit in the K bits is 1, it indicates the first apparatus to select a parameter corresponding to the bit. In this implementation, a specific form of the common sparse mask is provided. The first apparatus selects parameters based on values of bits in the bit sequence, so that an operation is simple and convenient. This reduces overheads for reporting the parameter of the first model by the first apparatus, and reduces occupation of communication resources.

Based on the first aspect, in a possible implementation, the common sparse mask is determined by the first apparatus based on a sparsity ratio and a pseudo-random number, and the sparsity ratio is indicated by the second apparatus to the first apparatus. In this implementation, a manner of generating the common sparse mask is provided, to facilitate implementation of the solution. Therefore, the first apparatus reports some parameters of the first model based on the common sparse mask, thereby reducing the overheads generated when the first apparatus reports the parameter of the first model.

Based on the first aspect, in a possible implementation, the method further includes: The first apparatus receives second indication information from the second apparatus, where the second indication information indicates the common sparse mask. In this implementation, the first apparatus selects the N parameters from the K parameters of the first model based on the common sparse mask. This helps reduce the overheads generated when the first apparatus reports the parameter of the first model.

Based on the first aspect, in a possible implementation, the method further includes: The first apparatus sends third indication information to the second apparatus, where the third indication information indicates indexes of the N parameters whose absolute values of corresponding values are largest and that are in the K parameters.

In this implementation, the first apparatus may indicate, to the second apparatus, the indexes of the N parameters whose absolute values of corresponding values are largest and that are in the K parameters of the first apparatus. This helps the second apparatus determine the appropriate common sparse mask. The third indication information indicates the indexes of the N parameters whose absolute values of the corresponding values are largest and that are in the K parameters. This helps the first apparatus preferentially feed back a parameter with a large change subsequently, thereby improving model training accuracy and improving model training performance.

Based on the first aspect, in a possible implementation, the first model is a neural network model, and the related information of the first model includes related parameters of neurons at P layers of the neural network model, where P is an integer greater than or equal to 1. In this implementation, the first apparatus may report a parameter of one or more layers of the neural network model. In other words, the first apparatus reports the parameter of the neural network model in a unit of a layer of the neural network model. This helps the first apparatus accurately report the parameter of each layer, thereby improving model training accuracy.

A second aspect of this application provides a communication method. The communication method may be performed by a second apparatus. The second apparatus may be a communication device, or may be a component (for example, a chip (system)) in the communication device. The communication method includes:

A second apparatus sends at least one quantization threshold to a first apparatus, where the at least one quantization threshold is used to perform quantization on related information of a first model of the first apparatus. The second apparatus receives first information sent from the first apparatus, where the first information indicates quantized related information of the first model. It can be learned from the foregoing technical solution that, this helps reduce communication overheads for reporting the related information of the first model by the first apparatus, and saves communication resources.

Based on the second aspect, in a possible implementation, the related information of the first model includes an output parameter or an update parameter of the first model, and the update parameter includes a weight gradient or a weight parameter of the first model. In this implementation, two possible parameters included in the related information of the first model are shown, so that the second apparatus fuses training results reported by all apparatuses, to obtain related information of a global model. In this application, models on all apparatuses may be understood as a same model. To distinguish between models on different apparatuses, on a first apparatus side, the model may be referred to as the first model, and on a second apparatus side, the model may be referred to as the global model.

Based on the second aspect, in a possible implementation, the method further includes:

The second apparatus receives second information from the first apparatus, where the second information indicates information obtained by processing the related information of the first model, or the second information indicates information obtained by performing an $M^{th}$ round of training on the first model and performing processing by the first apparatus, and the related information of the first model is related information obtained by performing a $Q^{th}$ round of training on the first model by the first apparatus, where M is an integer greater than or equal to 1 and less than Q, and Q is an integer greater than 1. The second apparatus determines the at least one quantization threshold based on the second information.

In this implementation, the second apparatus receives the second information from the first apparatus, so that the second apparatus determines the at least one quantization threshold based on the second information. This helps the second apparatus determine an appropriate quantization threshold, and helps the first apparatus perform proper quantization on the related information of the first model, thereby reducing overheads for reporting the related information of the first model by the first apparatus while ensuring precision of the related information of the first model reported by the first apparatus.

Based on the second aspect, in a possible implementation, the related information of the first model includes the output parameter of the first model, and the information obtained by processing the related information of the first model includes an average value of absolute values of values of output parameters of the first model, or the related information of the first model includes the update parameter of the first model, and the information obtained by processing the related information of the first model includes an average value of absolute values of values of update parameters of the first model. In this implementation, two possible implementations of the related information of the first model are shown. The second apparatus may receive, from the first apparatus, the average value of the absolute values of the values of the output parameters of the first model or the average value of the absolute values of the values of the update parameters of the first model. This helps the second apparatus determine the appropriate quantization threshold.

Based on the second aspect, in a possible implementation, the method further includes: The second apparatus receives third information from a third apparatus, where the third information indicates information obtained by processing related information of a second model of the third apparatus, or the third information indicates information obtained by performing an $S^{th}$ round of training on the second model and performing processing by the third apparatus, and the related information of the second model is related information obtained by performing an $R^{th}$ round of training on the second model by the third apparatus, where S is an integer greater than or equal to 1 and less than R, and R is an integer greater than 1.

That the second apparatus determines the at least one quantization threshold based on the second information includes: The second apparatus determines the at least one quantization threshold based on the second information and the third information.

In this implementation, the second apparatus may further receive the third information from the third apparatus, and determine the at least one quantization threshold based on the second information and the third information. This helps the second apparatus determine the appropriate quantization threshold, thereby reducing overheads for reporting the related information of the first model by the first apparatus while ensuring precision of the related information of the first model reported by the first apparatus.

Based on the second aspect, in a possible implementation, the method further includes: The second apparatus determines global information of the first model based on the first information; and the second apparatus sends fourth information to the first apparatus, where the fourth information indicates the global information of the first model. In this implementation, the second apparatus may determine the global information of the first model based on the first information, and send the global information of the first model to the first apparatus. In this way, the first apparatus updates or trains the first model.

Based on the second aspect, in a possible implementation, the global information of the first model includes a global output parameter of the first model, or the global information of the first model includes a global update parameter and/or a global learning rate of the first model.

In this implementation, two implementations of the global information of the first model are shown. For example, the global information of the first model includes the global output parameter of the first model, so that the first apparatus trains the first model based on the global output parameter. This helps improve training performance of the first model and improve accuracy of the first model. For example, the global information of the first model includes the global update parameter and/or the global learning rate of the first model, so that the first apparatus updates the first model based on the global update parameter and/or the global learning rate. This helps improve accuracy of the first model.

Based on the second aspect, in a possible implementation, the method further includes: The second apparatus receives fifth information from the third apparatus, where the fifth information indicates the related information of the second model of the third apparatus. That the second apparatus determines global information of the first model based on the first information includes: The second apparatus determines the global information of the first model based on the first information and the fifth information. In this implementation, the second apparatus may further receive the fifth information from the third apparatus, and determine the global information of the first model based on the first information and the fifth information. This helps improve accuracy of determining the global information of the first model by the second apparatus and improve accuracy of updating the model.

Based on the second aspect, in a possible implementation, the related information of the first model includes N parameters of the first model, and N is an integer greater than or equal to 1. The related information of the second model includes N parameters of the second model, and the first information includes N quantized parameters of the first model. That the second apparatus receives first information sent from the first apparatus includes: The second apparatus receives N first signals from the first apparatus, where the N first signals carry the N quantized parameters of the first model, and the N first signals one-to-one correspond to the N quantized parameters of the first model. The fifth information includes N quantized parameters of the second model. That the second apparatus receives fifth information from the third apparatus includes: The second apparatus receives N second signals from the third apparatus, where the N second signals carry the N quantized parameters of the second model, and the N second signals one-to-one correspond to the N quantized parameters of the second model. That the second apparatus determines the global information of the first model based on the first information and the fifth information includes: The second apparatus determines the global information of the first model based on the N first signals and the N second signals.

Based on the second aspect, in a possible implementation, an $i^{th}$ first signal in the N first signals corresponds to a first sequence and a second sequence, an $i^{th}$ second signal in the N second signals corresponds to a third sequence and a fourth sequence, a time-frequency resource used by the first apparatus to send the first sequence is the same as a time-frequency resource used by the third apparatus to send the third sequence, a time-frequency resource used by the first apparatus to send the second sequence is the same as a time-frequency resource used by the third apparatus to send the fourth sequence, and the global information of the first model includes N global parameters of the first model, where i is an integer greater than or equal to 1 and less than or equal to N. That the second apparatus determines the global information of the first model based on the N first signals and the N second signals includes: The second apparatus determines a first signal energy sum of the first sequence and the third sequence that are received by the second apparatus; the second apparatus determines a second signal energy sum of the second sequence and the fourth sequence that are received by the second apparatus; and the second apparatus determines an $i^{th}$ global parameter in the N global parameters based on the first signal energy sum and the second signal energy sum. It can be learned that the second apparatus may determine the $i^{th}$ global parameter based on the signal energy of the two sequences that correspond to the $i^{th}$ first signal and that are received by the second apparatus and the signal energy of the two sequences that correspond to the $i^{th}$ second signal and that are received by the second apparatus. In this way, the second apparatus is supported in implementing incoherent reception in multi-user over-the-air signal superimposition transmission and implementing robustness to a fading channel.

Based on the second aspect, in a possible implementation, that the second apparatus determines an $i^{th}$ global parameter in the N global parameters based on the first signal energy sum and the second signal energy sum includes: If a sum of the first signal energy sum and a decision threshold is less than the second signal energy sum, the second apparatus determines a value of the $i^{th}$ global parameter as a first value; or if a sum of the first signal energy sum and the decision threshold is greater than or equal to the second signal energy sum, and a sum of the second signal energy sum and the decision threshold is greater than or equal to the first signal energy sum, the second apparatus determines a value of the $i^{th}$ global parameter as a second value; or if a sum of the second signal energy sum and the decision threshold is less than the first signal energy sum, the second apparatus determines a value of the $i^{th}$ global parameter as a third value.

In this implementation, the process in which the second apparatus determines the $i^{th}$ global parameter is shown. It can be learned from the foregoing description that the three possible conditions of the first signal energy sum and the second signal energy sum correspond to the three decision results of the $i^{th}$ global parameter. Therefore, the $i^{th}$ global parameter is accurately determined. This helps improve accuracy of updating the first model by the first apparatus and improve training performance of the first model.

Based on the second aspect, in a possible implementation, the method further includes: The second apparatus sends first indication information to the first apparatus, where the first indication information indicates a quantity L of sending times that the first apparatus sends the first information to the second apparatus, and L is an integer greater than or equal to 1. In this implementation, the second apparatus indicates, to the first apparatus, the quantity of sending times of sending the first information, so that the first apparatus sends the first information based on the quantity of sending times. This helps the second apparatus determine the quantity of sending times based on an actual requirement, thereby properly utilizing communication resources.

Based on the second aspect, in a possible implementation, the method further includes: The second apparatus sends second indication information to the first apparatus, where the second indication information indicates a common sparse mask, and the common sparse mask indicates the first apparatus to report some parameters obtained by training the first model by the first apparatus. In this implementation, the second apparatus sends the second indication information to the first apparatus, where the second indication information indicates the common sparse mask. Therefore, the first apparatus selects the N parameters from the K parameters of the first model based on the common sparse mask. This helps reduce overheads generated when the first apparatus reports the parameter of the first model.

Based on the second aspect, in a possible implementation, the method further includes: The second apparatus receives third indication information from the first apparatus, where the third indication information indicates indexes of the N parameters whose absolute values of corresponding values are largest and that are in K parameters obtained by performing one round of training on the first model by the first apparatus. The second apparatus receives fourth indication information from the third apparatus, where the fourth indication information indicates indexes of the N parameters whose absolute values of corresponding values are largest and that are in K parameters of the second model of the third apparatus, and the K parameters of the second model are K parameters obtained by performing one round of training on the second model by the third apparatus. The second apparatus determines the common sparse mask based on the third indication information and the fourth indication information. In this implementation, each apparatus indicates the index of the parameter whose absolute value of the corresponding value is the largest in the K parameters of the apparatus. This helps the second apparatus determine the appropriate common sparse mask based on the third indication information and the fourth indication information. In this way, the first apparatus can preferentially feed back a parameter with a large change based on the common sparse mask, thereby improving model training accuracy and model training performance.

A third aspect of this application provides a communication method. The communication method may be performed by a first apparatus. The first apparatus may be a communication device, or may be a component (for example, a chip (system)) in the communication device. The communication method includes:

A first apparatus sends first indication information to a second apparatus, where the first indication information indicates indexes of N parameters whose absolute values of corresponding values are largest and that are in K parameters of a first model of the first apparatus, and the K parameters of the first model are K parameters obtained by performing one round of training on the first model by the first apparatus, where K is an integer greater than or equal to N, K is an integer greater than or equal to 1, and N is an integer greater than or equal to 1. Then, the first apparatus receives second indication information from the second apparatus. The second indication information indicates a common sparse mask, the common sparse mask is determined by the second apparatus based on the first indication information, and the common sparse mask indicates the first apparatus to report some parameters obtained by training the first model by the first apparatus.

In the foregoing technical solution, the first apparatus may report the first indication information to the second apparatus, to indicate the indexes of the N parameters whose absolute values of the corresponding values are largest and that are in the K parameters of the first model. Therefore, the second apparatus determines the appropriate common sparse mask based on the first indication information. The first apparatus receives the second indication information from the second apparatus. The second indication information indicates the common sparse mask. Therefore, the first apparatus can preferentially feed back a parameter with a large change based on the common sparse mask. This helps reduce overheads generated when the first apparatus reports the parameter of the first model, improves model training accuracy, and improves model training performance.

A fourth aspect of this application provides a communication method. The communication method may be performed by a second apparatus. The second apparatus may be a communication device, or may be a component (for example, a chip (system)) in the communication device. The communication method includes:

A second apparatus receives first indication information from a first apparatus, where the first indication information indicates indexes of N parameters whose absolute values of corresponding values are largest and that are in K parameters of a first model of the first apparatus, and the K parameters of the first model are K parameters obtained by performing one round of training on the first model by the first apparatus, where K is an integer greater than or equal to N, K is an integer greater than or equal to 1, and N is an integer greater than or equal to 1. The second apparatus determines a common sparse mask based on the first indication information, where the common sparse mask indicates the first apparatus to report some parameters obtained by training the first model by the first apparatus. Then, the second apparatus sends second indication information to the first apparatus, where the second indication information indicates the common sparse mask.

In the foregoing technical solution, the second apparatus receives the first indication information from the first apparatus, where the first indication information indicates the indexes of the N parameters whose absolute values of the corresponding values are largest and that are in the K parameters of the first model. Therefore, the second apparatus can determine the appropriate common sparse mask based on the first indication information. The first apparatus can preferentially feed back a parameter with a large change based on the common sparse mask. This reduces overheads generated when the first apparatus reports the parameter of the first model, improves model training accuracy, and improves model training performance.

Based on the fourth aspect, in a possible implementation, the method further includes: The second apparatus receives third indication information from a third apparatus, where the third indication information indicates indexes of N parameters whose absolute values of corresponding values are largest and that are in K parameters of a second model of the third apparatus, and the K parameters of the second model are K parameters obtained by performing one round of training on the second model by the second apparatus. That the second apparatus determines a common sparse mask based on the first indication information includes: The second apparatus determines the common sparse mask based on the first indication information and the third indication information.

In this implementation, the second apparatus may further determine the common sparse mask based on the third indication information reported by the third apparatus, so that the second apparatus determines the appropriate common sparse mask for the first apparatus. The first apparatus can preferentially feed back the parameter with the large change based on the common sparse mask, thereby improving the model training accuracy and the model training performance.

A fifth aspect of this application provides a first apparatus, including:

a transceiver module, configured to receive at least one quantization threshold from a second apparatus; and a processing module, configured to perform quantization on related information of a first model of the first apparatus based on the at least one quantization threshold, where the transceiver module is further configured to send first information to the second apparatus, and the first information indicates quantized related information of the first model.

Based on the fifth aspect, in a possible implementation, the related information of the first model includes an output parameter or an update parameter of the first model, and the update parameter includes a weight gradient or a weight parameter of the first model.

Based on the fifth aspect, in a possible implementation, the transceiver module is further configured to send second information to the second apparatus, where the second information indicates information obtained by processing the related information of the first model, or the second information indicates information obtained by processing related information obtained by performing an $M^{th}$ round of training on the first model by the first apparatus, and the related information of the first model is related information obtained by performing a $Q^{th}$ round of training on the first model by the first apparatus, where M is an integer greater than or equal to 1 and less than Q, and Q is an integer greater than 1.

Based on the fifth aspect, in a possible implementation, the related information of the first model includes the output parameter of the first model, and the information obtained by processing the related information of the first model includes an average value of absolute values of values of output parameters of the first model; or the related information of the first model includes the update parameter of the first model, and the information obtained by processing the related information of the first model includes an average value of absolute values of values of update parameters of the first model.

Based on the fifth aspect, in a possible implementation, the transceiver module is further configured to receive third information from the second apparatus, where the third information indicates global information of the first model.

Based on the fifth aspect, in a possible implementation, the global information of the first model includes a global output parameter of the first model, or the global information of the first model includes a global update parameter and/or a global learning rate of the first model.

Based on the fifth aspect, in a possible implementation, the related information of the first model includes N parameters of the first model, and N is an integer greater than or equal to 1. The processing module is specifically configured to: perform quantization on the N parameters based on the at least one quantization threshold, to obtain N quantized parameters, where the first information includes the N quantized parameters. The transceiver module is specifically configured to: modulate the N quantized parameters, to obtain N first signals; and send the N first signals to the second apparatus.

Based on the fifth aspect, in a possible implementation, the at least one quantization threshold includes a first quantization threshold and a second quantization threshold. The processing module is specifically configured to:
if an $i^{th}$ parameter in the N parameters is greater than the first quantization threshold, quantize the $i^{th}$ parameter to a first value, where i is an integer greater than or equal to 1 and less than or equal to N; or if an $i^{th}$ parameter in the N parameters is less than or equal to the first quantization threshold and is greater than or equal to the second quantization threshold, quantize the $i^{th}$ parameter to a second value; or if an $i^{th}$ parameter in the N parameters is less than the second quantization threshold, quantize the $i^{th}$ parameter to a third value.

Based on the fifth aspect, in a possible implementation, the transceiver module is specifically configured to modulate an $i^{th}$ quantized parameter, to obtain an $i^{th}$ first signal, where the $i^{th}$ first signal corresponds to two sequences. When the $i^{th}$ quantized parameter is the first value, a transmit power at which the first apparatus sends a $1^{st}$ sequence in the two sequences is less than a transmit power at which the first apparatus sends a $2^{nd}$ sequence in the two sequences; when the $i^{th}$ quantized parameter is the second value, a transmit power at which the first apparatus sends a $1^{st}$ sequence in the two sequences is equal to a transmit power at which the first apparatus sends a $2^{nd}$ sequence in the two sequences; or when the $i^{th}$ quantized parameter is the third value, a transmit power at which the first apparatus sends a $1^{st}$ sequence in the two sequences is greater than a transmit power at which the first apparatus sends a $2^{nd}$ sequence in the two sequences.

Based on the fifth aspect, in a possible implementation, when the $i^{th}$ quantized parameter is the first value, the $1^{st}$ sequence in the two sequences is a non-all-0 sequence, and the $2^{nd}$ sequence is an all-0 sequence; when the $i^{th}$ quantized parameter is the second value, the two sequences are both all-0 sequences; or when the $i^{th}$ quantized parameter is the third value, the $1^{st}$ sequence in the two sequences is an all-0 sequence, and the $2^{nd}$ sequence is a non-all-0 sequence.

Based on the fifth aspect, in a possible implementation, the transceiver module is specifically configured to send the first information to the second apparatus L times, where L is an integer greater than or equal to 1.

Based on the fifth aspect, in a possible implementation, the transceiver module is further configured to receive first indication information from the second apparatus, where the first indication information indicates the quantity L of sending times that the first apparatus sends the first information to the second apparatus.

Based on the fifth aspect, in a possible implementation, the related information of the first model includes N parameters of the first model that are obtained through quantization error compensation, the N parameters obtained through quantization error compensation are obtained by performing error compensation for the N parameters by the first apparatus based on quantization errors respectively corresponding to the N parameters obtained by performing the $Q^{th}$ round of training on the first model by the first apparatus, and Q is the integer greater than 1. A quantization error corresponding to the $i^{th}$ parameter in the N parameters is determined based on an $i^{th}$ parameter obtained by performing a $(Q-1)^{th}$ round of training on the first model and performing quantization error compensation by the first apparatus.

Based on the fifth aspect, in a possible implementation, the related information of the first model includes N parameters of the first model that are obtained through sparsification, the N parameters of the first model that are obtained through sparsification are the N parameters selected by the first apparatus from K parameters of the first model based on a common sparse mask, and the K parameters of the first model are parameters obtained by performing the $Q^{th}$ round of training on the first model by the first apparatus, where K is an integer greater than or equal to N, and K is an integer greater than or equal to 1.

Based on the fifth aspect, in a possible implementation, the common sparse mask is a bit sequence, the bit sequence includes K bits, and the K bits one-to-one correspond to the K parameters. When a value of one bit in the K bits is 0, it indicates the first apparatus not to select a parameter corresponding to the bit; or when a value of one bit in the K bits is 1, it indicates the first apparatus to select a parameter corresponding to the bit.

Based on the fifth aspect, in a possible implementation, the common sparse mask is determined by the first apparatus based on a sparsity ratio and a pseudo-random number, and the sparsity ratio is indicated by the second apparatus to the first apparatus.

Based on the fifth aspect, in a possible implementation, the transceiver module is further configured to receive second indication information from the second apparatus, where the second indication information indicates the common sparse mask.

Based on the fifth aspect, in a possible implementation, the transceiver module is further configured to send third indication information to the second apparatus, where the third indication information indicates indexes of the N parameters whose absolute values of corresponding values are largest and that are in the K parameters.

Based on the fifth aspect, in a possible implementation, the first model is a neural network model, and the related information of the first model includes related parameters of neurons at P layers of the neural network model, where P is an integer greater than or equal to 1.

A sixth aspect of this application provides a second apparatus, including:
a transceiver module, configured to: send at least one quantization threshold to a first apparatus, where the at least one quantization threshold is used to perform quantization on related information of a first model of the first apparatus; and receive first information sent from the first apparatus, where the first information indicates quantized related information of the first model.

Based on the sixth aspect, in a possible implementation, the related information of the first model includes an output parameter or an update parameter of the first model, and the update parameter includes a weight gradient or a weight parameter of the first model.

Based on the sixth aspect, in a possible implementation, the transceiver module is further configured to receive second information from the first apparatus, where the second information indicates information obtained by processing the related information of the first model, or the second information indicates information obtained by performing an $M^{th}$ round of training on the first model and performing processing by the first apparatus, and the related information of the first model is related information obtained by performing a $Q^{th}$ round of training on the first model by the first apparatus, where M is an integer greater than or equal to 1 and less than Q, and Q is an integer greater than 1. The second apparatus further includes a processing module. The processing module is configured to determine the at least one quantization threshold based on the second information.

Based on the sixth aspect, in a possible implementation, the related information of the first model includes the output parameter of the first model, and the information obtained by processing the related information of the first model includes an average value of absolute values of values of output parameters of the first model, or the related information of the first model includes the update parameter of the first model, and the information obtained by processing the related information of the first model includes an average value of absolute values of values of update parameters of the first model.

Based on the sixth aspect, in a possible implementation, the transceiver module is further configured to receive third information from a third apparatus, where the third information indicates information obtained by processing related information of a second model of the third apparatus, or the third information indicates information obtained by performing an $S^{th}$ round of training on the second model and performing processing by the third apparatus, and the related information of the second model is related information obtained by performing an $R^{th}$ round of training on the second model by the third apparatus, where S is an integer greater than or equal to 1 and less than R, and R is an integer greater than 1. The processing module is configured to determine the at least one quantization threshold based on the second information and the third information.

Based on the sixth aspect, in a possible implementation, the processing module is further configured to: determine global information of the first model based on the first information; and the transceiver module is further configured to send fourth information to the first apparatus, where the fourth information indicates the global information of the first model.

Based on the sixth aspect, in a possible implementation, the global information of the first model includes a global output parameter of the first model, or the global information of the first model includes a global update parameter and/or a global learning rate of the first model.

Based on the sixth aspect, in a possible implementation, the transceiver module is further configured to receive fifth information from the third apparatus, where the fifth information indicates the related information of the second model of the third apparatus; and the processing module is specifically configured to determine the global information of the first model based on the first information and the fifth information.

Based on the sixth aspect, in a possible implementation, the related information of the first model includes N parameters of the first model, and N is an integer greater than or equal to 1. The related information of the second model includes N parameters of the second model, and the first information includes N quantized parameters of the first model. The transceiver module is specifically configured to receive N first signals from the first apparatus, where the N first signals carry the N parameters of the first model, and the N first signals one-to-one correspond to the N quantized parameters of the first model. The fifth information includes N quantized parameters of the second model. The transceiver module is specifically configured to receive N second signals from the third apparatus, where the N second signals carry the N quantized parameters of the second model, and the N second signals one-to-one correspond to the N quantized parameters of the second model. The processing module is specifically configured to determine the global information of the first model based on the N first signals and the N second signals.

Based on the sixth aspect, in a possible implementation, an $i^{th}$ first signal in the N first signals corresponds to a first sequence and a second sequence, an $i^{th}$ second signal in the N second signals corresponds to a third sequence and a fourth sequence, a time-frequency resource used by the first apparatus to send the first sequence is the same as a time-frequency resource used by the third apparatus to send the third sequence, a time-frequency resource used by the first apparatus to send the second sequence is the same as a time-frequency resource used by the third apparatus to send the fourth sequence, and the global information of the first model includes N global parameters of the first model, where i is an integer greater than or equal to 1 and less than or equal to N. The processing module is specifically configured to:

determine a first signal energy sum of the first sequence and the third sequence that are received by the second apparatus; determine a second signal energy sum of the second sequence and the fourth sequence that are received by the second apparatus; and determine an $i^{th}$ global parameter in the N global parameters based on the first signal energy sum and the second signal energy sum.

Based on the sixth aspect, in a possible implementation, the processing module is specifically configured to: if a sum of the first signal energy sum and a decision threshold is less than the second signal energy sum, determine a value of the $i^{th}$ global parameter as a first value; or if a sum of the first signal energy sum and the decision threshold is greater than or equal to the second signal energy sum, and a sum of the second signal energy sum and the decision threshold is greater than or equal to the first signal energy sum, determine a value of the $i^{th}$ global parameter as a second value; or if a sum of the second signal energy sum and the decision threshold is less than the first signal energy sum, determine a value of the $i^{th}$ global parameter as a third value.

Based on the sixth aspect, in a possible implementation, the transceiver module is further configured to send first indication information to the first apparatus, where the first indication information indicates a quantity L of sending times that the first apparatus sends the first information to the second apparatus, where L is an integer greater than or equal to 1.

Based on the sixth aspect, in a possible implementation, the transceiver module is further configured to send second indication information to the first apparatus, where the second indication information indicates a common sparse mask, and the common sparse mask indicates the first apparatus to report some parameters obtained by training the first model by the first apparatus.

Based on the sixth aspect, in a possible implementation, the transceiver module is further configured to: receive third indication information from the first apparatus, where the third indication information indicates indexes of the N parameters whose absolute values of corresponding values are largest and that are in K parameters obtained by performing one round of training on the first model by the first apparatus; and receive fourth indication information from the third apparatus, where the fourth indication information indicates indexes of the N parameters whose absolute values of corresponding values are largest and that are in K parameters of the second model of the third apparatus, and the K parameters of the second model are K parameters obtained by performing one round of training on the second model by the third apparatus. The second apparatus further includes the processing module. The processing module is further configured to determine the common sparse mask based on the third indication information and the fourth indication information.

A seventh aspect of this application provides a first apparatus, including:

a transceiver module, configured to: send first indication information to a second apparatus, where the first indication information indicates indexes of N parameters whose absolute values of corresponding values are largest and that are in K parameters of a first model of the first apparatus, and the K parameters of the first model are K parameters obtained by performing one round of training on the first model by the first apparatus, where K is an integer greater than or equal to N, K is an integer greater than or equal to 1, and N is an integer greater than or equal to 1; and receive second indication information from the second apparatus, where the second indication information indicates a common sparse mask, the common sparse mask is determined by the second apparatus based on the first indication information, and the common sparse mask indicates the first apparatus to report some parameters obtained by training the first model by the first apparatus.

An eighth aspect of this application provides a second apparatus, including:

a transceiver module, configured to receive first indication information from a first apparatus, where the first indication information indicates indexes of N parameters whose absolute values of corresponding values are largest and that are in K parameters of a first model of the first apparatus, and the K parameters of the first model are K parameters obtained by performing one round of training on the first model by the first apparatus, where K is an integer greater than or equal to N, K is an integer greater than or equal to 1, and N is an integer greater than or equal to 1; and

a processing module, configured to determine a common sparse mask based on the first indication information, where the common sparse mask indicates the first apparatus to report some parameters obtained by training the first model by the first apparatus.

The transceiver module is further configured to send second indication information to the first apparatus, where the second indication information indicates the common sparse mask.

Based on the eighth aspect, in a possible implementation, the transceiver module is further configured to: receive third indication information from a third apparatus, where the third indication information indicates indexes of N parameters whose absolute values of corresponding values are largest and that are in K parameters of a second model of the third apparatus, and the K parameters of the second model are K parameters obtained by performing one round of training on the second model by the third apparatus.

The processing module is specifically configured to:

determine the common sparse mask based on the first indication information and the third indication information.

For the fifth aspect or the seventh aspect, the first apparatus may be a communication device, the transceiver module may be a transceiver or an input/output interface, and the processing module may be a processor.

In another implementation, the first apparatus is a chip, a chip system, or a circuit disposed in the communication device. When the first apparatus is the chip, the chip system, or the circuit disposed in the communication device, the transceiver module may be an input/output interface, an interface circuit, an output circuit, an input circuit, a pin, a related circuit, or the like on the chip, the chip system, or the circuit. The processing module may be a processor, a processing circuit, a logic circuit, or the like.

For the sixth aspect or the eighth aspect, the second apparatus may be a communication device, the transceiver module may be a transceiver or an input/output interface, and the processing module may be a processor.

In another implementation, the second apparatus is a chip, a chip system, or a circuit disposed in a communication device. When the second apparatus is the chip, the chip system, or the circuit disposed in the communication device, the transceiver module may be an input/output interface, an interface circuit, an output circuit, an input circuit, a pin, a related circuit, or the like on the chip, the chip system, or the circuit. The processing module may be a processor, a processing circuit, a logic circuit, or the like.

A ninth aspect of this application provides a first apparatus. The first apparatus includes a processor and a memory. The memory stores a computer program or computer instructions, and the processor is configured to invoke and run the computer program or the computer instructions stored in the memory, so that the processor implements any one of the implementations of the first aspect or the third aspect.

Optionally, the first apparatus further includes a transceiver, and the processor is configured to control the transceiver to receive or send a signal.

A tenth aspect of this application provides a second apparatus. The second apparatus includes a processor and a memory. The memory stores a computer program or computer instructions, and the processor is configured to invoke and run the computer program or the computer instructions stored in the memory, so that the processor implements any one of the implementations of the second aspect or the fourth aspect.

Optionally, the second apparatus further includes a transceiver, and the processor is configured to control the transceiver to receive or send a signal.

An eleventh aspect of this application provides a first apparatus, including a processor and an interface circuit. The processor is configured to: communicate with another apparatus through the interface circuit, and perform the method in either the first aspect or the third aspect. There are one or more processors.

A twelfth aspect of this application provides a second apparatus, including a processor and an interface circuit. The processor is configured to: communicate with another apparatus through the interface circuit, and perform the method in either the second aspect or the fourth aspect. There are one or more processors.

A thirteenth aspect of this application provides a first apparatus, including a processor, configured to: connect to a memory, and invoke a program stored in the memory, to perform the method in either the first aspect or the third aspect. The memory may be located inside the first apparatus, or may be located outside the first apparatus. There are one or more processors.

A fourteenth aspect of this application provides a second apparatus, including a processor, configured to: connect to a memory, and invoke a program stored in the memory, to perform the method in either the second aspect or the fourth aspect. The memory may be located inside the second apparatus, or may be located outside the second apparatus. There are one or more processors.

In an implementation, the first apparatus in the fifth aspect, the seventh aspect, the ninth aspect, the eleventh aspect, and the thirteenth aspect may be a chip (system).

In an implementation, the second apparatus in the sixth aspect, the eighth aspect, the tenth aspect, the twelfth aspect, and the fourteenth aspect may be a chip (system).

A fifteenth aspect of this application provides a computer program product including instructions. When the computer program product runs on a computer, the computer is enabled to perform any implementation of any one of the first aspect to the fourth aspect.

A sixteenth aspect of this application provides a computer-readable storage medium, including computer instructions. When the instructions are run on a computer, the computer is enabled to perform any implementation of any one of the first aspect to the fourth aspect.

A seventeenth aspect of this application provides a chip apparatus, including a processor, configured to invoke a computer program or computer instructions in a memory, so that the processor performs any implementation of any one of the first aspect to the fourth aspect.

Optionally, the processor is coupled to the memory through an interface.

An eighteenth aspect of this application provides a communication system. The communication system includes the first apparatus in the fifth aspect and the second apparatus in the sixth aspect; or the communication system includes the first apparatus in the seventh aspect and the second apparatus in the eighth aspect.

According to the foregoing technical solutions, it can be learned that embodiments of this application have the following advantages.

In the foregoing technical solution, the first apparatus receives the at least one quantization threshold from the second apparatus. Then, the first apparatus performs quantization on the related information of the first model of the first apparatus based on the at least one quantization threshold. The first apparatus sends the first information to the second apparatus, where the first information indicates the quantized related information of the first model. This reduces communication overheads for reporting the related information of the first model by the first apparatus, and saves communication resources.

## BRIEF DESCRIPTION OF DRAWINGS

FIG. 1 is a diagram of a communication system to which an embodiment of the present invention is applied;
FIG. 2 is a diagram of an embodiment of a communication method according to embodiments of this application;
FIG. 3 is a schematic flowchart of a communication method according to embodiments of this application;
FIG. 4 is a diagram of another embodiment of a communication method according to embodiments of this application;
FIG. 5 is a diagram of generating a common sparse mask according to an embodiment of this application;
FIG. 6 is a diagram of a structure of a first apparatus according to an embodiment of this application;
FIG. 7 is a diagram of another structure of a first apparatus according to an embodiment of this application;
FIG. 8 is a diagram of a structure of a second apparatus according to an embodiment of this application;
FIG. 9 is a diagram of another structure of a second apparatus according to an embodiment of this application;
FIG. 10 is a diagram of a structure of a terminal device according to an embodiment of this application; and
FIG. 11 is a diagram of a structure of a network device according to an embodiment of this application.

## DESCRIPTION OF EMBODIMENTS

Embodiments of this application provide a communication method and a related apparatus, to reduce communication overheads for reporting related information of a first model by a first apparatus, and save communication resources.

The following clearly and completely describes technical solutions in embodiments of this application with reference to accompanying drawings in embodiments of this application. It is clear that the described embodiments are merely a part rather than all of embodiments of this application. All other embodiments obtained by a person skilled in the art based on embodiments of this application without creative efforts shall fall within the protection scope of this application.

Reference to "an embodiment", "some embodiments", or the like described in this application means that one or more embodiments of this application include a specific feature, structure, or characteristic described with reference to embodiments. Therefore, statements such as "in one embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "contain", "have", and variants thereof all mean "include but are not limited to", unless otherwise specifically emphasized in another manner.

In descriptions of this application, unless otherwise specified, "/" means "or". For example, A/B may indicate A or B. A term "and/or" in this specification describes only an association relationship between associated objects and indicates that there may be three relationships. For example, A and/or B may indicate the following three cases: Only A exists, both A and B exist, and only B exists. In addition, "at least one" means one or more, and "a plurality of" means two or more. "At least one of the following items (pieces)" or a similar expression thereof means any combination of these items, including a singular item (piece) or any combination of plural items (pieces). For example, at least one item (piece) of a, b, or c may indicate a, b, c, a and b, a and c, b and c, or a, b, and c, where a, b, and c may be singular or plural.

It may be understood that, in this application, an "indication" may include a direct indication, an indirect indication, an explicit indication, and an implicit indication. When a piece of indication information is described as indicating A, it may be understood that the indication information carries A, directly indicates A, or indirectly indicates A.

In this application, information indicated by the indication information is referred to as to-be-indicated information. In a specific implementation process, there are many manners of indicating the to-be-indicated information. For example, the manners include but are not limited to a manner in which the to-be-indicated information, for example, the to-be-indicated information itself or an index of the to-be-indicated information, may be directly indicated, or a manner in which the to-be-indicated information may be indirectly indicated by indicating other information. There is an association relationship between the other information and the to-be-indicated information. Alternatively, only a part of the to-be-indicated information may be indicated, and the other part of the to-be-indicated information is known or pre-agreed on. For example, specific information may alternatively be indicated in an arrangement sequence of a plurality of pieces of information that is pre-agreed on (for example, specified in a protocol), to reduce indication overheads to some extent.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by sending configuration information to a receive end device by a transmit end device.

The technical solutions of this application may be applied to a cellular communication system related to the 3rd generation partnership project (3rd generation partnership project, 3GPP), for example, a 4th generation (4th generation, 4G) communication system, a 5th generation (5th generation, 5G) communication system, or a communication system after the 5th generation communication system, and for example, a 6th generation communication system. For example, the 4th generation communication system may include a long term evolution (long term evolution, LTE) communication system. The 5th generation communication system may include a new radio (new radio, NR) communication system. The technical solutions of this application may also be applied to a wireless fidelity (wireless fidelity, Wi-Fi) system, a communication system that supports convergence of a plurality of wireless technologies, a device-to-device (device-to-device, D2D) system, a vehicle-to-everything (vehicle to everything, V2X) communication system, and the like.

The communication system to which the technical solutions of this application are applicable includes a first apparatus and a second apparatus. Optionally, the communication system further includes a third apparatus.

The following describes some possible forms of the first apparatus and the second apparatus. This application is still applicable to another form, and the following implementations do not constitute a limitation on this application.

1. A first apparatus is a first terminal device or a chip in the first terminal device, and a second apparatus is a network device or a chip in the network device. In this implementation, the first apparatus and the second apparatus may perform the communication method provided in this application.

Optionally, a third apparatus is a second terminal device or a chip in the second terminal device. The third apparatus may perform the communication method provided in this application.

It should be noted that the first terminal device and the second terminal device are used as an example for description. In actual application, the network device may perform the communication method provided in this application with more terminal devices.

2. A first apparatus is a first network device or a chip in the first network device, and a second apparatus is a terminal device or a chip in the terminal device. In this implementation, the first apparatus and the second apparatus may perform the communication method provided in this application.

Optionally, a third apparatus is a second network device or a chip in the second network device. The third apparatus may perform the communication method provided in this application.

It should be noted that the first network device and the second network device are used as an example for description. In actual application, the terminal device may perform the communication method provided in this application with more network devices.

3. A first apparatus is a first terminal device or a chip in the first terminal device, and a second apparatus is a second terminal device or a chip in the second terminal device. In this implementation, the first apparatus and the second apparatus may perform the communication method provided in this application.

Optionally, a third apparatus is a third terminal device or a chip in the third terminal device. The third apparatus may perform the communication method provided in this application.

It should be noted that the first terminal device, the second terminal device, and the third terminal device are used as an example for description. In actual application, the first terminal device may perform the communication method provided in this application with more terminal devices.

The following describes a terminal device and a network device in this application.

The terminal device is a device having a wireless transceiver function, and further has a computing capability. The terminal device may perform machine learning training based on local data, and send, to the network device, related information of a model obtained by the terminal device through training.

The terminal device may be user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. Alternatively, the terminal device may be a satellite phone, a cellular phone, a smartphone, a wireless data card, a wireless modem, or a machine type communication device, or may be a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a communication device carried on a high-altitude aircraft, a wearable device, an uncrewed aerial vehicle, a robot, a terminal in D2D, a terminal in V2X, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in a future communication network, or the like. This is not limited in this application.

The network device has a wireless transceiver function, and further has a computing capability. The network device is configured to communicate with the terminal device. In other words, the network device may be a device that connects the terminal device to a wireless network. For example, the network device may be a network node having a computing capability. For example, the network device may be an artificial intelligence (artificial intelligence, AI) node, a computing node, or an access network node having an AI capability on a network side (for example, an access network or a core network). The network device may fuse models trained by a plurality of terminal devices, and then send an obtained model to the terminal devices. In this way, collaborative learning between the plurality of terminal devices is implemented.

The network device may be a node in a radio access network. The network device may be referred to as a base station, or may be referred to as a radio access network (radio access network, RAN) node or a RAN device. The network device may be an evolved NodeB (evolved NodeB, eNB or eNodeB) in LTE, a next generation NodeB (next generation NodeB, gNB) in a 5G network, a base station in a future evolved public land mobile network (public land mobile network, PLMN), a broadband network gateway (broadband network gateway, BNG), an aggregation switch or a non-3rd generation partnership project (3rd generation partnership project, 3GPP) access device, or the like. Optionally, the network device in embodiments of this application may include base stations in various forms, for example, a macro base station, a micro base station (also referred to as a small cell), a relay station, an access point, a device that implements a base station function in a communication system evolved after 5G, an access point (access point, AP) in a Wi-Fi system, a transmitting and receiving point (transmitting and receiving point, TRP), a transmitting point (transmitting point, TP), a mobile switching center, and a device that undertakes a base station function in D2D communication, V2X device communication, or machine-to-machine (machine-to-machine, M2M) communication. The network device may further include a central unit (central unit, CU) and a distributed unit (distributed unit, DU) in a cloud access network (cloud radio access network, C-RAN) system, and a network device in a non-terrestrial network (non-terrestrial network, NTN) communication system. That is, the network device may be deployed on a high-altitude platform or a satellite. This is not limited in this application.

The following describes a possible communication system to which this application is applicable.

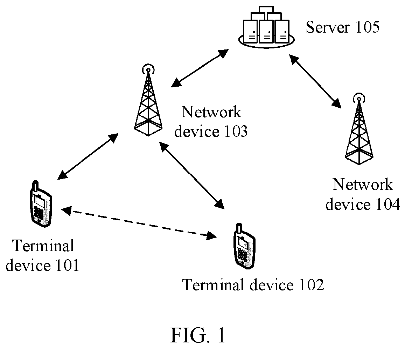

FIG. 1 is a diagram of a communication system to which an embodiment of this application is applied. As shown in FIG. 1, the communication system includes a terminal device 101, a terminal device 102, a network device 103, a network device 104, and a server 105. The terminal device 101 may establish a communication connection to the network device 103, and the terminal device 102 may establish a communication connection to the network device 103.

In a possible implementation, the terminal device 101, the terminal device 102, and the network device 103 may perform the communication method provided in this application, to reduce overheads for reporting related information of a model of the terminal device by the terminal device, and reduce communication overheads.

It should be noted that FIG. 1 is merely an example. In actual application, the communication system includes at least one network device and at least one terminal device.

Distributed learning is a learning method for implementing collaborative learning. Specifically, a plurality of node devices obtain local models through training based on local data, and a central node device fuses the plurality of local models, to obtain a global model. In this way, collaborative learning is implemented on a premise that privacy of user data of the node devices is protected.

The plurality of node devices may respectively train the local models of the node devices, to obtain related parameters of the local models, for example, a weight parameter or a weight gradient of the local model. Then, the plurality of node devices send the related parameters of the local models to the central node device. The central node device fuses the related parameters of the local models sent by the plurality of node devices, to obtain a related parameter of the global model, and delivers the related parameter to each node device. Each node device may update a local model of the node device based on the related parameter of the global model. It can be learned from the foregoing technical solution that all the node devices respectively send the related parameters of the local models to the central node device, resulting in a large amount of data reported by the node device and large communication overheads. Therefore, how the node devices report the related parameters of the local models with low communication overheads is an urgent problem to be resolved.

The following describes mathematical symbols in this application.

mean(x): indicates that an average value of all elements in a vector x is obtained.

abs(y): indicates that an absolute value of each element in a vector y is obtained.

$mean(x_1, y_1)$: indicates that an average value of an element $x_1$ and an element $y_1$ is obtained.

The following describes the technical solutions of this application with reference to specific embodiments.

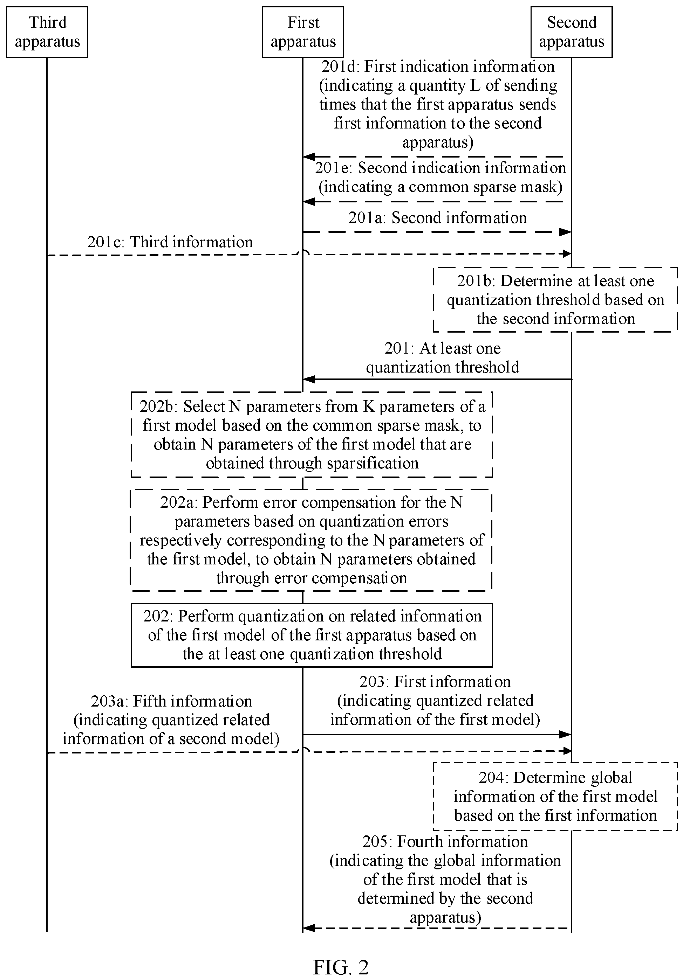

FIG. 2 is a diagram of an embodiment of a communication method according to embodiments of this application. Refer to FIG. 2. The method includes the following steps.

201: A second apparatus sends at least one quantization threshold to a first apparatus. Correspondingly, the first apparatus receives the at least one quantization threshold from the second apparatus.

The at least one quantization threshold is used by the first apparatus to perform quantization on related information of a first model. Optionally, the first model may be a model configured by the second apparatus for the first apparatus. Optionally, the first model may be a neural network model.

Optionally, the related information of the first model is obtained by performing one round of training on the first model by the first apparatus.

Optionally, the related information of the first model includes an output parameter or an update parameter of the first model. The output parameter of the first model may be understood as output data of the first model. For ease of description, the output parameter of the first model is collectively referred to as an output parameter below. The update parameter of the first model includes a weight parameter or a weight gradient of the first model. For example, the first model is a neural network model, and the related information of the first model includes an output parameter of the neural network model. Alternatively, the related information of the first model includes a weight parameter or a weight gradient of the neural network model.

In a possible implementation, the first apparatus is a first terminal device, the second apparatus is a network device, and the at least one quantization threshold may be carried in downlink control information, a radio resource control (radio resource control, RRC) message, or a media access control control element (medium access control control element, MAC CE).

In another possible implementation, the first apparatus is a network device, the second apparatus is a terminal device, and the at least one quantization threshold may be carried in uplink control information.

The following describes a possible implementation in which the second apparatus determines the at least one quantization threshold. Optionally, the embodiment shown in FIG. 2 further includes step 201a and step 201b. Step 201a and step 201b may be performed before step 201.

201a: The first apparatus sends second information to the second apparatus. Correspondingly, the second apparatus receives the second information from the first apparatus.

The following describes two possible implementations of the second information.

Implementation 1: The second information indicates information obtained by processing the related information of the first model.

Optionally, the second information includes the information obtained by processing the related information of the first model, or the second information indicates the information obtained by processing the related information of the first model.

For example, the related information of the first model includes the output parameter of the first model. The information obtained by processing the related information of the first model includes an average value or a weighted value of absolute values of output parameters of the first model. For example, the output parameter of the first model includes an output parameter A, an output parameter B, and an output parameter C that are of the first model. The first apparatus averages absolute values respectively corresponding to the output parameter A, the output parameter B, and the output parameter C, to obtain an average value of the absolute values of the output parameters. The second information includes the average value or the weighted value of the absolute values of the output parameters of the first model. Alternatively, the second information indicates the average value or the weighted value of the absolute values of the output parameters of the first model.

For example, the second information is indication information, and a correspondence between a value of the indication information and the average value or the weighted value of the absolute values of the output parameters of the first model may be shown in Table 1 or Table 2.

Table 1

| Value of the indication information | Average value or weighted value of the absolute values of the output parameters |
|---|---|
| 00 | 0.25 |
| 01 | 0.5 |
| 10 | 0.75 |
| 11 | 1 |

For example, the related information of the first model includes the update parameter of the first model. The information obtained by processing the related information of the first model includes an average value or a weighted value of absolute values of update parameters of the first model. For example, the update parameter of the first model includes a weight gradient $\Delta w_Q^1$, a weight gradient $\Delta w_Q^2$, and a weight gradient $\Delta w_Q^3$ that are obtained by performing a $Q^{th}$ round of training on the first model by the first apparatus. The first apparatus averages absolute values respectively corresponding to the weight gradient $\Delta w_Q^1$, the weight gradient $\Delta w_Q^2$, and the weight gradient $\Delta w_Q^3$, to obtain an average value of the absolute values of the weight gradients of the first model. The second information includes the average value or the weighted value of the absolute values of the update parameters of the first model. Alternatively, the second information indicates the average value or the weighted value of the absolute values of the update parameters of the first model. For example, the second information is indication information, and a correspondence between a value of the indication information and the average value or the weighted value of the absolute values of the update parameters of the first model may be shown in Table 2.

Table 2

| Value of the indication information | Average value or weighted value of the absolute values of the update parameters |
|---|---|
| 00 | 0.5 |
| 01 | 1 |
| 10 | 1.5 |
| 11 | 2 |

Implementation 2: The second information indicates information obtained by processing related information obtained by performing an $M^{th}$ round of training on the first model by the first apparatus. The related information of the first model is related information obtained by performing a $Q^{th}$ round of training on the first model by the first apparatus. M is an integer greater than or equal to 1 and less than Q, and Q is an integer greater than 1.

In the implementation 2, the second information includes the information obtained by processing the related information obtained by performing the $M^{th}$ round of training on the first model by the first apparatus; or the second information indicates the information obtained by processing the related information obtained by performing the $M^{th}$ round of training on the first model by the first apparatus. For the information obtained by processing the related information obtained by performing the $M^{th}$ round of training on the first model by the first apparatus, refer to related descriptions of the information obtained by processing the related information of the first model.

The implementation 2 is similar to the implementation 1. For details, refer to related descriptions of the implementation 1.

In a possible implementation, the first apparatus is a terminal device, the second apparatus is a network device, and the second information may be carried in downlink control information, an RRC message, or a MAC CE. In another possible implementation, the first apparatus is a network device, the second apparatus is a terminal device, and the second information may be carried in uplink control information.

201b: The second apparatus determines the at least one quantization threshold based on the second information.

For example, the at least one quantization threshold includes one quantization threshold. The second information includes the average value of the absolute values of the weight gradients of the first model. The quantization threshold $\gamma_1 = mean(abs(\Delta w_Q)) * a$, and $a$ indicates a control factor, and is used to control a range of quantization. A value range of $a$ is $[0, +\infty)$. $abs(\Delta w_Q)$ represents the absolute value of the weight gradient obtained by performing the $Q^{th}$ round of training on the first model by the first apparatus.

For example, the at least one quantization threshold includes two quantization thresholds: a first quantization threshold and a second quantization threshold. The first quantization threshold $\gamma_1 = mean(abs(\Delta w_Q)) * a$, and the second quantization threshold $-\gamma_1 = -mean(abs(\Delta w_Q)) * a$. $abs(\Delta w_Q)$ represents the absolute value of the weight gradient obtained by performing the $Q^{th}$ round of training on the first model by the first apparatus.

Optionally, the embodiment shown in FIG. 2 further includes step 201c. Step 201c may be performed before step 201.

201c: A third apparatus sends third information to the second apparatus. Correspondingly, the second apparatus receives the third information from the third apparatus.

The third information indicates information obtained by processing related information of a second model of the third apparatus. Alternatively, the third information indicates information obtained by performing an $S^{th}$ round of training on the second model and performing processing by the third apparatus. The related information of the second model is related information obtained by performing an $R^{th}$ round of training on the second model by the third apparatus. S is an integer greater than or equal to 1 and less than R, and R is an integer greater than 1. The third information is similar to the second information. For details, refer to the foregoing related descriptions of the second information.

It should be noted that the second model may be a model configured by the second apparatus for the third apparatus. The first model and the second model may be a same model. For example, both the first model and the second model are global models configured by the second apparatus. The first model and the second model in this specification are intended to distinguish between models on the first apparatus and the second apparatus, and may be actually a same model.

Based on step 201c above, optionally, step 201b above specifically includes the following step.

The second apparatus determines the at least one quantization threshold based on the second information and the third information.

For example, the second information includes the average value of the absolute values of the weight gradients of the first model. The third information includes an average value of absolute values of weight gradients of the second model. The second apparatus determines the at least one quantization threshold based on the average value of the absolute values of the weight gradients of the first model and the average value of the absolute values of the weight gradients of the second model. For example, the at least one quantization threshold includes two quantization thresholds: a first quantization threshold and a second quantization threshold. The first quantization threshold $\gamma_1$ = mean (mean (abs($\Delta w_Q$)), mean(abs ($\Delta w_R$))) $* a$ , and the second quantization threshold - $\gamma_1$ = -mean mean(abs($\Delta w_Q$)), mean(abs($\Delta w_R$))) $* a$. N weight gradients obtained by performing the $Q^{th}$ round of training on the first model by the first apparatus are represented by a vector $\Delta w_Q$. N weight gradients obtained by performing the $R^{th}$ round of training on the second model by the second apparatus are represented by a vector $\Delta w_R$.

It should be noted that step 201a to step 201c above are merely an example in which the second apparatus determines the at least one quantization threshold based on the second information of the first apparatus and the third information of the third apparatus, to perform the technical solutions of this application. In actual application, the second apparatus may receive related information, indicated by a plurality of apparatuses, of a model, and determine the at least one quantization threshold based on the related information of the model. This is not specifically limited in this application.

It should be noted that there is no fixed execution sequence between step 201c and step 201a. Step 201a may be performed before step 201c; or step 201c may be performed before step 201a; or step 201a and step 201c may be simultaneously performed based on a situation. This is not specifically limited in this application.

202: The first apparatus performs quantization on the related information of the first model of the first apparatus based on the at least one quantization threshold.

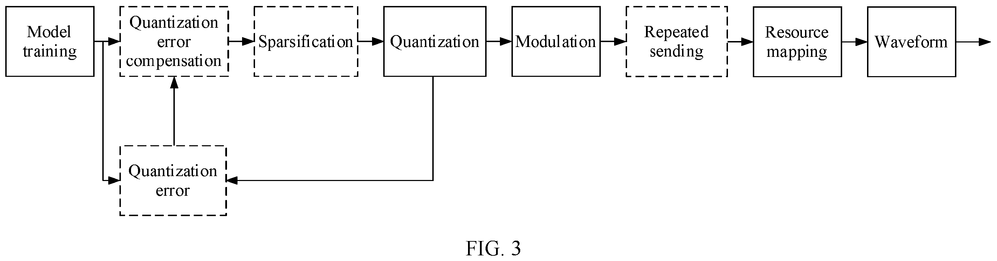

It can be learned from the foregoing description that the related information of the first model includes the output parameter or the update parameter of the first model. Herein, the technical solutions of this application are described by using an example in which the related information of the first model includes N parameters of the first model. N is an integer greater than or equal to 1. Therefore, step 202 above specifically includes: The first apparatus performs quantization on the N parameters of the first model based on the at least one quantization threshold, to obtain N quantized parameters. For example, as shown in FIG. 3, the first apparatus performs the $Q^{th}$ round of training on the first model, to obtain the related information of the first model. Then, the first apparatus performs quantization on the related information of the first model.

In a possible implementation, the at least one quantization threshold includes one quantization threshold $\gamma_1$. The related information of the first model includes the N parameters of the first model. Step 202 above specifically includes: If an $i^{th}$ parameter in the N parameters is greater than the quantization threshold $\gamma_1$, the first apparatus quantizes the $i^{th}$ parameter to a first value, where i is an integer greater than or equal to 1 and less than or equal to N; or if an $i^{th}$ parameter in the N parameters is less than or equal to the quantization threshold $\gamma_1$, the first apparatus quantizes the $i^{th}$ parameter to a third value. Alternatively, step 202 above specifically includes: If an $i^{th}$ parameter in the N parameters is greater than or equal to the quantization threshold $\gamma_1$, the first apparatus quantizes the $i^{th}$ parameter to a first value, where i is an integer greater than or equal to 1 and less than or equal to N; or if an $i^{th}$ parameter in the N parameters is less than the quantization threshold $\gamma_1$, the first apparatus quantizes the $i^{th}$ parameter to a third value.

For example, the first value is +1, and the third value is -1. The N parameters of the first model are N weight gradients of the first model. An $i^{th}$ weight gradient in the N weight gradients is represented as $\Delta w_Q^i$ . When the weight gradient $\Delta w_Q^i$ is greater than the quantization threshold $\gamma_1$, the weight gradient $\Delta w_Q^i$ is quantized to +1; or when the weight gradient $\Delta w_Q^i$ is less than or equal to the quantization threshold $\gamma_1$, the weight gradient $\Delta w_Q^i$ is quantized to -1. An $i^{th}$ quantized weight gradient $s_i$ may be represented according to the following formula 1:

$$s_i=\begin{cases}+1, \text{if } \Delta \boldsymbol{w}_Q^i > \gamma_1 \\ -1, \text{if } \Delta \boldsymbol{w}_Q^i \leq \gamma_1\end{cases} \text{ Formula 1}$$

The foregoing shows the process in which the first apparatus quantizes the $i^{th}$ parameter in the N parameters of the first model, and is also applicable to a process of quantizing another parameter in the N parameters. Details are not described herein again.

It should be noted that, optionally, if the $i^{th}$ parameter in the N parameters is greater than or equal to the quantization threshold $\gamma_1$, the first apparatus quantizes the $i^{th}$ parameter to the first value, where i is an integer greater than or equal to 1 and less than or equal to N; or if the $i^{th}$ parameter in the N parameters is less than or equal to the quantization threshold $\gamma_1$, the first apparatus quantizes the $i^{th}$ parameter to the third value. In other words, if the $i^{th}$ parameter is equal to the quantization threshold $\gamma_1$, the first apparatus may quantize the $i^{th}$ parameter to the first value or the third value. In this case, the first apparatus may randomly quantize the $i^{th}$ parameter to the first value or the third value in a random quantization manner.

In another possible implementation, the at least one quantization threshold includes two quantization thresholds: a first quantization threshold $\gamma_1$ and a second quantization threshold $-\gamma_1$. The related information of the first model includes the N parameters of the first model. Step 202 above specifically includes: If an $i^{th}$ parameter in the N parameters is greater than the first quantization threshold $\gamma_1$, the first apparatus quantizes the $i^{th}$ parameter to a first value, where i is an integer greater than or equal to 1 and less than or equal to N; if an $i^{th}$ parameter in the N parameters is less than or equal to the first quantization threshold $\gamma_1$ and is greater than or equal to the second quantization threshold $-\gamma_1$, the first apparatus quantizes the $i^{th}$ parameter to a second value; or if an $i^{th}$ parameter in the N parameters is less than the second quantization threshold $-\gamma_1$, the first apparatus quantizes the $i^{th}$ parameter to a third value. Alternatively, step 202 above specifically includes: If an $i^{th}$ parameter in the N parameters is greater than or equal to the first quantization threshold $\gamma_1$, the first apparatus quantizes the $i^{th}$ parameter to a first value, where i is an integer greater than or equal to 1 and less than or equal to N; if an $i^{th}$ parameter in the N parameters is less than the first quantization threshold $\gamma_1$ and is greater than the second quantization threshold $-\gamma_1$, the first apparatus quantizes the $i^{th}$ parameter to a second value; or if the $i^{th}$ parameter in the N parameters is less than or equal to the second quantization threshold $-\gamma_1$, the first apparatus quantizes the $i^{th}$ parameter to a third value.

For example, the first value is +1, the second value is 0, and the third value is -1. The N parameters of the first model are N weight gradients of the first model. An $i^{th}$ weight gradient in the N weight gradients is represented as $\Delta \boldsymbol{w}_Q^i$. When the weight gradient $\Delta \boldsymbol{w}_Q^i$ is greater than the first quantization threshold $\gamma_1$, the weight gradient $\Delta \boldsymbol{w}_Q^i$ is quantized to +1. When the weight gradient $\Delta \boldsymbol{w}_Q^i$ is less than the second quantization threshold $-\gamma_1$, the weight gradient $\Delta \boldsymbol{w}_Q^i$ is quantized to -1. When the weight gradient $\Delta \boldsymbol{w}_Q^i$ is less than or equal to the first quantization threshold $\gamma_1$ and is greater than or equal to the second quantization threshold $-\gamma_1$, the weight gradient $\Delta \boldsymbol{w}_Q^i$ is quantized to 0. Therefore, an $i^{th}$ quantized weight gradient $s_i$ may be represented according to the following formula 2:

$$s_i=\begin{cases} +1, \text{if } \Delta \boldsymbol{w}_Q^i > \gamma_1 \\ 0, \text{if } -\gamma_1 \leq \Delta \boldsymbol{w}_Q^i \leq \gamma_1 \text{ Formula 2} \\ +1, \text{if } \Delta \boldsymbol{w}_Q^i < -\gamma_1 \end{cases}$$

The foregoing shows the process in which the first apparatus quantizes the $i^{th}$ parameter in the N parameters of the first model, and is also applicable to a process of quantizing another parameter in the N parameters. Details are not described herein again. In the foregoing implementation, the first apparatus may quantize the parameter of the first model based on a plurality of quantization thresholds. This helps improve quantization precision and improve model convergence speed and performance. Further, it can be learned from the foregoing formula 2 that a value of $s_i$ may be 0, and it indicates that the first apparatus may not update the $i^{th}$ parameter when a value of the $i^{th}$ parameter falls within a range between the second quantization threshold and the first quantization threshold. For example, if the $i^{th}$ parameter is caused by training noise, the first apparatus does not update the $i^{th}$ parameter. This helps improve accuracy of a first model obtained by the second apparatus through training.

It should be noted that, optionally, if the $i^{th}$ parameter in the N parameters is greater than or equal to the first quantization threshold $\gamma_1$, the first apparatus quantizes the $i^{th}$ parameter to the first value, where i is the integer greater than or equal to 1 and less than or equal to N; if the $i^{th}$ parameter in the N parameters is less than or equal to the first quantization

threshold $\gamma_1$ and is greater than or equal to the second quantization threshold $-\gamma_1$, the first apparatus quantizes the ith parameter to the second value; or if the ith parameter in the N parameters is less than the second quantization threshold $-\gamma_1$, the first apparatus quantizes the ith parameter to the third value. In other words, for the ith parameter, if the ith parameter is equal to the first quantization threshold $\gamma_1$, the first apparatus may quantize the ith parameter to the first value or the second value. In this case, the first apparatus may randomly quantize the ith parameter to the first value or the second value in a random quantization manner.

It should be noted that, optionally, if the ith parameter in the N parameters is greater than the first quantization threshold $\gamma_1$, the first apparatus quantizes the ith parameter to the first value, where i is the integer greater than or equal to 1 and less than or equal to N; if the ith parameter in the N parameters is less than or equal to the first quantization threshold $\gamma_1$ and is greater than or equal to the second quantization threshold $-\gamma_1$, the first apparatus quantizes the ith parameter to the second value; or if the ith parameter in the N parameters is less than or equal to the second quantization threshold $-\gamma_1$, the first apparatus quantizes the ith parameter to the third value. In other words, for the ith parameter, if the ith parameter is equal to the second quantization threshold $-\gamma_1$, the first apparatus may quantize the ith parameter to the second value or the third value. In this case, the first apparatus may randomly quantize the ith parameter to the second value or the third value in a random quantization manner.

The foregoing shows an example in which the at least one quantization threshold includes one quantization threshold and two quantization thresholds. In actual application, the at least one quantization threshold may include three quantization thresholds, four quantization thresholds, or more quantization thresholds. This is not specifically limited in this application, and examples are not provided one by one herein.

Optionally, in step 202 above, the related information of the first model includes N parameters of the first model that are obtained through quantization error compensation. For the N parameters obtained through quantization error compensation, refer to related descriptions in step 202a below.

Optionally, the embodiment shown in FIG. 2 further includes step 202a, and step 202a may be performed before step 202.

202a: The first apparatus performs error compensation for the N parameters based on quantization errors respectively corresponding to the N parameters of the first model, to obtain the N parameters obtained through quantization error compensation.

The N parameters of the first model are obtained by performing the Qth round of training on the first model by the first apparatus. A quantization error corresponding to the ith parameter in the N parameters is determined based on an ith parameter obtained by performing a (Q-1)th round of training on the first model and performing quantization error compensation by the first apparatus.

For example, the ith parameter in the N parameters of the first model is the ith weight gradient $\Delta w_Q^i$, and an ith weight gradient obtained through quantization error compensation may be represented as $\Delta w_Q^i{}' = \Delta w_Q^i + e_{Q-1}^i$. $e_{Q-1}^i = \Delta w_{Q-1}^i{}' - \eta * Q(\Delta w_{Q-1}^i{}')$, $\Delta w_{Q-1}^i{}'$ represents an ith weight gradient obtained through quantization error compensation and the (Q-1)th round of training. $\eta$ indicates a global learning rate. $Q(\Delta w_{Q-1}^i{}')$ represents quantization on $\Delta w_{Q-1}^i{}'$.

It should be noted that the first apparatus may determine a quantization error $e_Q^i$ corresponding to an ith parameter obtained through a (Q+1)th round of training, where $e_Q^i = \Delta w_Q^i{}' - \eta * Q(\Delta w_Q^i{}')$. Therefore, the first apparatus performs quantization error compensation for N parameters obtained through the (Q+1)th round of training.

Based on step 202a above, the related information of the first model includes the N parameters obtained through quantization error compensation. Optionally, step 202 above specifically includes: The first apparatus performs, based on the at least one quantization threshold, quantization on the N parameters obtained through quantization error compensation. For a specific quantization process, refer to related descriptions of step 202 above.

It can be learned that, in step 202a above, the first apparatus performs quantization error compensation for the N parameters based on the quantization errors respectively corresponding to the N parameters of the first model. This helps improve accuracy of updating the first model by the second apparatus and improve model training performance.

Optionally, in step 202 above, the related information of the first model includes N parameters of the first model that are obtained through sparsification. For the N parameters of the first model that are obtained through sparsification, refer to related descriptions in step 202b below.

Optionally, the embodiment shown in FIG. 2 further includes step 202b. Step 202b may be performed before step 202.

202b: The first apparatus selects N parameters from K parameters of the first model based on a common sparse mask, to obtain the N parameters of the first model that are obtained through sparsification.

In a possible implementation, the K parameters of the first model are obtained by performing one round of training on the first model by the first apparatus.

In another possible implementation, the K parameters of the first model are obtained by performing one round of training on the first model and performing quantization error compensation by the first apparatus. A process in which the first apparatus performs quantization error compensation for the K parameters is similar to that in step 202a above. For details, refer to related descriptions of step 202a above.

Optionally, the common sparse mask is a bit sequence, and the bit sequence includes K bits. The K bits one-to-one correspond to the K parameters. When a value of one bit in the K bits is 0, it indicates the first apparatus not to select a parameter corresponding to the bit. When a value of one bit in the K bits is 1, it indicates the first apparatus to select a parameter corresponding to the bit. Alternatively, when a value of one bit in the K bits is 0, it indicates the first apparatus to select a parameter corresponding to the bit. When a value of one bit in the K bits is 1, it indicates the first apparatus not to select a parameter corresponding to the bit. For example, the K parameters include 10 weight gradients of the first model. The bit sequence is 1000111100, and the bit sequence one-to-one corresponds to the 10 weight gradients from a most significant bit to a least significant bit. For example, a 1st bit in the bit sequence corresponds to a 1st weight gradient in the 10 weight gradients, a 2nd bit in the bit sequence corresponds to a 2nd weight gradient in the 10 weight gradients, and the rest can be deduced by analogy. A 10th bit in the bit sequence corresponds to a 10th weight gradient in the 10 weight gradients. In this case, it can be learned that the related information of the first model includes the 1st weight gradient, a 5th weight gradient, a 6th weight gradient, a 7th weight gradient, and an 8th weight gradient in the 10 weight gradients.

The following describes two possible implementations in which the first apparatus obtains the common sparse mask.

Implementation 1: The common sparse mask is determined by the first apparatus based on a sparsity ratio and a pseudo-random number. The sparsity ratio is indicated by the second apparatus to the first apparatus.

It should be noted that a plurality of apparatuses need to use a same common sparse mask, so that all of the plurality of apparatuses send, to the second apparatus, parameters with a same index of models configured on the apparatuses. In addition, the plurality of apparatuses may send the parameters with the same index on a same time-frequency resource. This helps reduce communication resources required by the plurality of apparatuses to report model parameters and improve communication resource utilization. In this way, the second apparatus is supported in receiving, on a same time-frequency resource, the parameters with the same index that are sent by the plurality of apparatuses. In other words, the second apparatus is supported in implementing model fusion through superimposition of over-the-air signals.

It should be noted that the second apparatus may indicate different sparsity ratios to the first apparatus in different training phases. For example, in a start phase of training, the sparsity ratio may be small. In this way, it is convenient for the second apparatus to obtain more related information of the model, to implement fast model convergence. In a convergence phase of training, the sparsity ratio may be large.

Implementation 2: The following describes the implementation 2 based on step 201e.

Optionally, the embodiment shown in FIG. 2 further includes step 201e. Step 201e may be performed before step 202b.

202b: The second apparatus sends second indication information to the first apparatus. Correspondingly, the first apparatus receives the second indication information from the second apparatus. The second indication information indicates the common sparse mask.

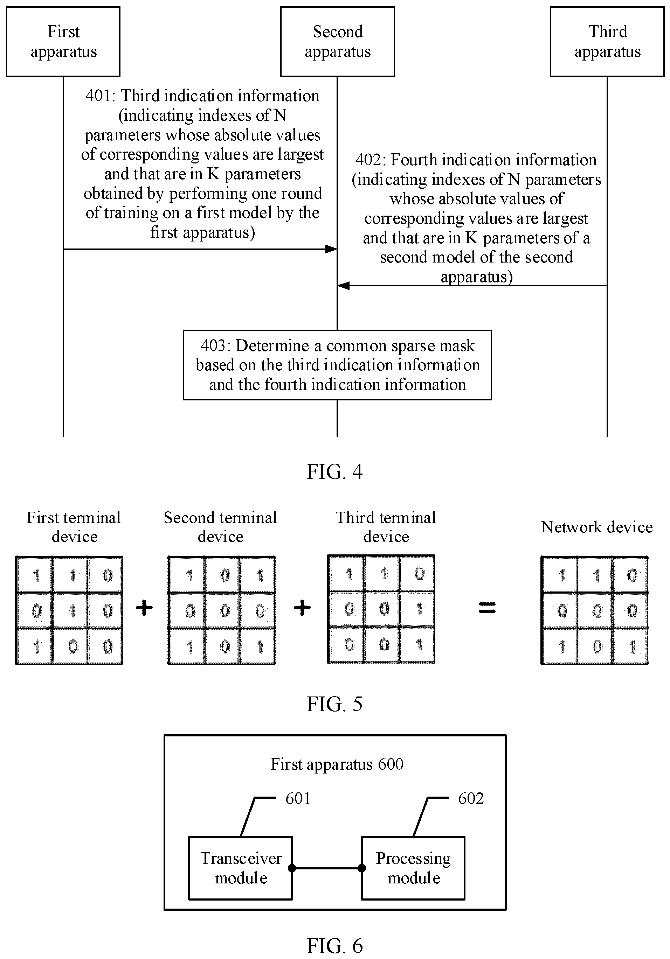

With reference to an embodiment shown in FIG. 4, the following describes a possible implementation in which the second apparatus determines the common sparse mask. For details, refer to related descriptions of the embodiment shown in FIG. 4 below.

Based on step 202b above, optionally, step 202 above specifically includes: The first apparatus performs, based on the at least one quantization threshold, quantization on the N parameters of the first model that are obtained through sparsification. For a specific quantization process, refer to related descriptions of step 202 above. For example, as shown in FIG. 3, the first apparatus performs the Qth round of training on the first model, to obtain the K parameters of the first model. Then, the first apparatus performs quantization error compensation for the K parameters of the first model, to obtain K parameters obtained through quantization error compensation. The first apparatus selects, based on the common sparse mask, N parameters from the K parameters obtained through quantization error compensation, and then performs quantization on the N parameters based on the at least one quantization threshold.

It can be learned that, in step 202b above, the first apparatus selects some parameters of the first model based on the common sparse mask. This helps reduce overheads for reporting the parameters of the first model by the first apparatus.

There is no fixed execution sequence between step 201e above and step 201a, step 201b, step 201c, and step 201. Step 201e may be performed before step 201a, step 201b, step 201c, and step 201. Alternatively, step 201a, step 201b, step 201c, and step 201 may be performed before step 201e. Alternatively, step 201e, step 201a, step 201b, step 201c, and step 201 may be simultaneously performed based on a situation.

203: The first apparatus sends first information to the second apparatus. The first information indicates quantized related information of the first model. Correspondingly, the second apparatus receives the first information from the first apparatus.

In a possible implementation, the first information includes quantized related information of the first model. For example, the related information of the first model includes the N parameters of the first model, and the first information includes N quantized parameters of the first model.

In another possible implementation, the first information is indication information, and the indication information indicates the quantized related information of the first model.

Optionally, the related information of the first model includes the quantized N parameters of the first model. The following describes a possible implementation of step 203 above. Optionally, step 203 above specifically includes step 2003a and step 2003b.

2003a: The first apparatus modulates the N quantized parameters of the first model, to obtain N first signals. The N first signals one-to-one correspond to the N parameters.

2003b: The first apparatus sends the N first signals to the second apparatus. Correspondingly, the second apparatus receives the N first signals from the first apparatus.

The following describes step 2003a and step 2003b above with reference to the quantization example shown in the foregoing formula 2.

The first apparatus modulates an $i^{th}$ parameter in the N quantized parameters of the first model, to obtain an $i^{th}$ first signal. The $i^{th}$ first signal corresponds to two sequences, and each of the two sequences includes at least one symbol. The following describes two possible implementations in which the first apparatus sends the two sequences, so that the second apparatus determines a value of the $i^{th}$ quantized parameter.

Implementation 1: When the $i^{th}$ quantized parameter is the first value, a transmit power at which the first apparatus sends a $1^{st}$ sequence in the two sequences is less than a transmit power at which the first apparatus sends a $2^{nd}$ sequence in the two sequences. When the $i^{th}$ quantized parameter is the second value, a transmit power at which the first apparatus sends a $1^{st}$ sequence in the two sequences is equal to a transmit power at which the first apparatus sends a $2^{nd}$ sequence in the two sequences. When the $i^{th}$ quantized parameter is the third value, a transmit power at which the first apparatus sends a $1^{st}$ sequence in the two sequences is greater than a transmit power at which the first apparatus sends a $2^{nd}$ sequence in the two sequences.

Optionally, when the $i^{th}$ quantized parameter is the first value, the $1^{st}$ sequence in the two sequences is an all-0 sequence, and the $2^{nd}$ sequence is a non-all-0 sequence. When the $i^{th}$ quantized parameter is the second value, the two sequences are both all-0 sequences. When the $i^{th}$ quantized parameter is the third value, the $1^{st}$ sequence in the two sequences is a non-all-0 sequence, and the $2^{nd}$ sequence is an all-0 sequence. For example, the first value is +1, the second value is 0, and the third value is -1. The $i^{th}$ first signal carries the $i^{th}$ parameter $s_i$, and the $i^{th}$ parameter corresponds to two sequences. For various values of the $i^{th}$ parameter, the two corresponding sequences (namely, a sequence 1 and a sequence 2) are respectively shown in Table 3.

Table 3

| $s_i$ | +1 | 0 | -1 |
|---|---|---|---|
| Sequence 1 | 0 | 0 | $c_1$ |
| Sequence 2 | $c_0$ | 0 | 0 |

Both $c_0$ and $c_1$ are sequences of a specific length. For example, both a length of $c_0$ and a length of $c_1$ are 1. In other words, each of the sequences includes one symbol. Optionally, both $c_0$ and $c_1$ may be Zadoff-Chu sequences, and the Zadoff-Chu sequence may be briefly referred to as a ZC sequence.

Implementation 2: When the $i^{th}$ quantized parameter is the first value, a transmit power at which the first apparatus sends a $1^{st}$ sequence in the two sequences is greater than a transmit power at which the first apparatus sends a $2^{nd}$ sequence in the two sequences. When the $i^{th}$ quantized parameter is the second value, a transmit power at which the first apparatus sends a $1^{st}$ sequence in the two sequences is equal to a transmit power at which the first apparatus sends a $2^{nd}$ sequence in the two sequences. When the $i^{th}$ quantized parameter is the third value, a transmit power at which the first apparatus sends a $1^{st}$ sequence in the two sequences is less than a transmit power at which the first apparatus sends a $2^{nd}$ sequence in the two sequences.

Optionally, when the $i^{th}$ quantized parameter is the first value, the $1^{st}$ sequence in the two sequences is a non-all-0 sequence, and the $2^{nd}$ sequence is an all-0 sequence. When the $i^{th}$ quantized parameter is the second value, the two sequences are both all-0 sequences. When the $i^{th}$ quantized parameter is the third value, the $1^{st}$ sequence in the two sequences is an all-0 sequence, and the 2nd sequence is a non-all-0 sequence. For example, the first value is +1, the second value is 0, and the third value is -1. The $i^{th}$ first signal carries the $i^{th}$ parameter $s_i$, and the $i^{th}$ parameter corresponds to two sequences. For various values of the $i^{th}$ parameter, the two corresponding sequences (namely, a sequence 1 and a sequence 2) are respectively shown in Table 4.

Table 4

| $s_i$ | +1 | 0 | -1 |
|---|---|---|---|
| Sequence 1 | $\boldsymbol{c}_0$ | 0 | 0 |
| Sequence 2 | 0 | 0 | $\boldsymbol{c}_1$ |

For $\boldsymbol{c}_0$ and $\boldsymbol{c}_1$ refer to the foregoing related descriptions. Details are not described herein again.

It should be noted that the foregoing shows a possible example of the first value, the second value, and the third value. In actual application, the first value, the second value, and the third value may alternatively be other values. This is not specifically limited in this application. For example, the first value is 0.7, the second value is 0, and the third value is -0.7.

As shown in FIG. 3, after performing quantization on the N parameters of the first model, the first apparatus obtains the N quantized parameters of the first model. The first apparatus modulates the N quantized parameters of the first model, maps sequences obtained through modulation to corresponding time-frequency resources, and performs waveform shaping, to obtain the N first signals. The first apparatus sends the N first signals to the second apparatus. It can be learned from the foregoing description that the first apparatus modulates each of the N parameters of the first model to two sequences. The first apparatus controls a transmit power used to send each of the two sequences, so that the second apparatus determines a value of the parameter. The first apparatus does not need to perform channel estimation and equalization, so that corresponding pilot overheads are not required.

It can be learned that the first apparatus receives the at least one quantization threshold from the second apparatus. Then, the first apparatus performs quantization on the related information of the first model of the first apparatus based on the at least one quantization threshold. The first apparatus sends the first information to the second apparatus, where the first information indicates the quantized related information of the first model. This reduces communication overheads for reporting the related information of the first model by the first apparatus, and saves communication resources.

Optionally, the embodiment shown in FIG. 2 further includes step 204 and step 205. Step 204 and step 205 may be performed after step 203.

204: The second apparatus determines global information of the first model based on the first information.

The global information of the first model includes a global output parameter of the first model. Alternatively, the global information of the first model includes a global update parameter and/or a global learning rate of the first model. The global output parameter of the first model may be understood as global output data of the first model. The global update parameter of the first model includes a global weight parameter or a global weight gradient of the first model.

Optionally, the global information of the first model includes N global parameters of the first model, and the global parameter is an output parameter or an update parameter. For a process of determining the N global parameters, refer to related descriptions below.

Optionally, the first information includes the N quantized parameters of the first model, and the second apparatus may determine the global learning rate $\eta$ based on the N parameters of the first model.

For example, the N quantized parameters of the first model include N weight gradients obtained by performing the $Q^{th}$ round of training on the first model and performing quantization by the first apparatus. Specifically, the N weight gradients of the first model are represented by a vector $\Delta w_Q$. In other words, the vector $\Delta w_Q$ includes the N weight gradients obtained by performing the $Q^{th}$ round of training on the first model by the first apparatus. The second apparatus may determine the global learning rate $\eta = \text{mean}(\text{abs}(\Delta w_q))$. The vector $\Delta w_q$ includes a quantized non-0 weight parameter in the vector $\Delta w_Q$.

It should be noted that, optionally, the first apparatus may alternatively send sixth information to the second apparatus. The sixth information indicates an average value of absolute values of values of quantized non-0 parameters in the N parameters of the first model. The second apparatus determines the global learning rate based on the sixth information.

For example, the N parameters of the first model are the N weight gradients obtained by performing the $Q^{th}$ round of training on the first model by the first apparatus. Specifically, the N weight gradients of the first model are represented by the vector $\Delta w_Q$. In this case, the second apparatus may determine the global learning rate $\eta = \text{mean}(\text{abs}(\Delta w_q))$, where mean $(\text{abs}(\Delta w_q))$ is indicated by the first apparatus to the second apparatus based on the sixth information, and $\text{abs}(\Delta w_q)$ indicates an absolute value of a value of the quantized non-0 weight parameter in the vector $\Delta w_Q$.

It should be noted that, optionally, the global learning rate $\eta$ is variable. For example, the global learning rate $\eta$ is a

constant that varies with a quantity of training rounds.

It should be noted that, in step 204 above, the second apparatus determines the global learning rate based on the first information. In actual application, the second apparatus may determine the global learning rate based on the second information. Optionally, the second apparatus determines the global learning rate based on the second information and the third information. This is not specifically limited in this application.

In a possible implementation, the first model is the neural network model. The related information of the first model includes related parameters of neurons at all layers of the neural network model. In this implementation, the N global parameters of the first model that are included in the global information of the first model in step 204 above are global parameters of the neurons at all the layers.

In this implementation, the at least one quantization threshold and the global learning rate are uniformly set for the neurons at all the layers of the neural network model.

In another possible implementation, the first model is the neural network model. The related information of the first model includes related parameters of neurons at P layers of the neural network model, where P is an integer greater than or equal to 1.

In this implementation, the N global parameters of the first model that are included in the global information of the first model in step 204 above are global parameters of the neurons at the P layers.

In this implementation, the at least one quantization threshold and the global learning rate are uniformly set for the neurons at the P layers of the neural network model. For a neuron at a layer other than the P layers of the neural network model, a corresponding quantization threshold and global learning rate should be additionally determined.

Optionally, the embodiment shown in FIG. 2 further includes step 203a, and step 203a may be performed before step 204.

203a: The third apparatus sends fifth information to the second apparatus. The fifth information indicates quantized related information of the second model. Correspondingly, the second apparatus receives the fifth information from the third apparatus.

Specifically, the quantized related information of the second model is obtained by performing quantization on the related information of the second model based on the at least one quantization threshold by the third apparatus. For a specific quantization process, refer to related descriptions of step 202 above.

Optionally, the related information of the second model includes N parameters of the second model. For the second model, refer to the foregoing related descriptions. Optionally, step 203a above specifically includes step 1 and step 2.

Step 1: The third apparatus modulates the N parameters of the second model, to obtain N second signals. The N second signals carry the N parameters of the second model, and the N second signals one-to-one correspond to the N parameters of the second model.

Step 2: The third apparatus sends the N second signals to the second apparatus. Correspondingly, the second apparatus receives the N second signals from the third apparatus.

Step 1 and step 2 are similar to step 2003a and step 2003b above. For details, refer to related descriptions of step 2003a and step 2003b above. Details are not described herein again.

Optionally, the $i^{th}$ first signal in the N first signals corresponds to a first sequence and a second sequence. The first sequence is a $1^{st}$ sequence in the two sequences corresponding to the $i^{th}$ first signal, and the second sequence is a $2^{nd}$ sequence in the two sequences corresponding to the $i^{th}$ first signal. An $i^{th}$ second signal in the N second signals corresponds to a third sequence and a fourth sequence. The third sequence is a $1^{st}$ sequence in the two sequences corresponding to the $i^{th}$ second signal, and the fourth sequence is a $2^{nd}$ sequence in the two sequences corresponding to the $i^{th}$ second signal. i is an integer greater than or equal to 1 and less than or equal to N. A time-frequency resource used by the first apparatus to send the first sequence is the same as a time-frequency resource used by the third apparatus to send the third sequence. A time-frequency resource used by the first apparatus to send the second sequence is the same as a time-frequency resource used by the third apparatus to send the fourth sequence. In this way, the second apparatus is supported in implementing incoherent reception in multi-user over-the-air signal superimposition transmission.

It should be noted that there is no fixed execution sequence between step 203 and step 203a. Step 203 may be performed before step 203a; or step 203a may be performed before step 203; or step 203 and step 203a may be simultaneously performed based on a situation. This is not specifically limited in this application.

Based on step 203 and step 203a above, optionally, step 204 above specifically includes: The second apparatus determines the global information of the first model based on the first information and the fifth information.

Specifically, the second apparatus determines the global information of the first model based on the N first signals and the N second signals. The following describes a possible implementation of step 204 above by using an example in which the $i^{th}$ first signal in the N first signals corresponds to the first sequence and the second sequence, and the $i^{th}$ second signal in the N second signals corresponds to the third sequence and the fourth sequence. The time-frequency resource used by the first apparatus to send the first sequence is the same as the time-frequency resource used by the third apparatus to send the third sequence. The time-frequency resource used by the first apparatus to send the second sequence is the same as the time-frequency resource used by the third apparatus to send the fourth sequence.

Optionally, step 204 above specifically includes step 204a to step 204c.

204a: The second apparatus determines a first signal energy sum of the first sequence and the third sequence that are received by the second apparatus.

For example, the first signal energy sum may be represented as $\|\tilde{y}_{2i-1}\|^2$.

204b: The second apparatus determines a second signal energy sum of the second sequence and the fourth sequence that are received by the second apparatus.

For example, the second signal energy sum may be represented as $\|\tilde{y}_{2i}\|^2$.

204c: The second apparatus determines an $i^{th}$ global parameter in the N global parameters based on the first signal energy sum and the second signal energy sum.

Based on the implementation 1 in step 2003b above, optionally, step 204c above specifically includes the following step:

If a sum of the first signal energy sum and a decision threshold is less than the second signal energy sum, the second apparatus determines a value of the $i^{th}$ global parameter as the first value; or if a sum of the first signal energy sum and the decision threshold is greater than or equal to the second signal energy sum, and a sum of the second signal energy sum and the decision threshold is greater than or equal to the first signal energy sum, the second apparatus determines a value of the $i^{th}$ global parameter as the second value; or if a sum of the second signal energy sum and the decision threshold is less than the first signal energy sum, the second apparatus determines a value of the $i^{th}$ global parameter as the third value.

For example, the first value is +1, the second value is 0, and the third value is -1. The global information of the first model includes N global weight gradients of the first model, and an $i^{th}$ global weight gradient $a_i$ in the N global weight gradients may be represented as a formula 3:

$$a_i = \begin{cases} +1, \text{ if } \|\tilde{y}_{2i-1}\|^2 + \gamma_2 < \|\tilde{y}_{2i}\|^2 \\ 0, \text{ if } \|\tilde{y}_{2i-1}\|^2 \leq \|\tilde{y}_{2i}\|^2 + \gamma_2 \text{ and } \|\tilde{y}_{2i}\|^2 \leq \|\tilde{y}_{2i-1}\|^2 + \gamma_2 \quad \text{Formula 3} \\ -1, \text{ if } \|\tilde{y}_{2i}\|^2 + \gamma_2 < \|\tilde{y}_{2i-1}\|^2 \end{cases}$$

$\gamma_2$ indicates the decision threshold, the first signal energy sum may be represented as $\|\tilde{y}_{2i-1}\|^2$, and the second signal energy sum may be represented as $\|\tilde{y}_{2i}\|^2$.

Based on the implementation 2 in step 2003b above, optionally, step 204c above specifically includes the following step.

If the first signal energy sum is greater than a sum of the second signal energy sum and the decision threshold, the second apparatus determines a value of the $i^{th}$ global parameter as the first value; or if the first signal energy sum is less than or equal to a sum of the second signal energy sum and the decision threshold, and the second signal energy sum is less than or equal to a sum of the first signal energy sum and the decision threshold, the second apparatus determines a value of the $i^{th}$ global parameter as the second value; or if the second signal energy sum is greater than a sum of the first signal energy sum and the decision threshold, the second apparatus determines a value of the $i^{th}$ global parameter as the third value.

For example, the first value is +1, the second value is 0, and the third value is -1. The global information of the first model includes N global weight gradients of the first model, and an $i^{th}$ global weight gradient $a_i$ in the N global weight gradients may be represented as a formula 4:

$$a_i = \begin{cases} +1, \text{ if } \|\tilde{y}_{2i-1}\|^2 > \|\tilde{y}_{2i}\|^2 + \gamma_2 \\ 0, \text{ if } \|\tilde{y}_{2i-1}\|^2 \leq \|\tilde{y}_{2i}\|^2 + \gamma_2 \text{ and } \|\tilde{y}_{2i}\|^2 \leq \|\tilde{y}_{2i-1}\|^2 + \gamma_2 \quad \text{Formula 4} \\ -1, \text{ if } \|\tilde{y}_{2i}\|^2 > \|\tilde{y}_{2i-1}\|^2 + \gamma_2 \end{cases}$$

$\gamma_2$ indicates the decision threshold, the first signal energy sum may be represented as $\|\tilde{y}_{2i-1}\|^2$, and the second signal energy sum may be represented as $\|\tilde{y}_{2i}\|^2$.

The process of step 204a to step 204c above shows a process in which the second apparatus determines the $i^{th}$ global parameter. The second apparatus may determine another global parameter in the N global parameters by using a similar process. Details are not described herein again.

It should be noted that the second apparatus may determine the decision threshold based on the N first signals and/or the N second signals. For example, the first apparatus sends the $i^{th}$ first signal to the second apparatus, and the third apparatus sends the $i^{th}$ second signal to the second apparatus. The $i^{th}$ first signal and the $i^{th}$ second signal occupy a same time-frequency resource. The second apparatus receives a superimposed signal $y_i$ on the time-frequency resource. This is similar to another first signal and second signal, and examples are not described one by one herein. For example, the decision threshold $\gamma_2 = \text{mean}(\text{abs}(|y_{2i}|^2 - |y_{2i-1}|^2)$, where $0 < i \leq N$, i is an integer) $* b$. $\|\tilde{y}_{2i-1}\|^2$ represents the first signal energy sum, and $\|\tilde{y}_{2i}\|^2$ represents the second signal energy sum. For the first signal energy sum and the second signal energy sum, refer to the foregoing related descriptions. b indicates a control factor, is used to control the decision threshold, and affects a quantity of non-0 elements in the global parameter and updating of the first model.

It can be learned that the second apparatus may determine the $i^{th}$ global parameter based on the signal energy of the two sequences that correspond to the $i^{th}$ first signal and that are received by the second apparatus and the signal energy of the two sequences that correspond to the $i^{th}$ second signal and that are received by the second apparatus. In this way, the second apparatus is supported in implementing incoherent reception in multi-user over-the-air signal superimposition transmission and implementing robustness to a fading channel.

Optionally, the second apparatus may determine the global learning rate based on the first information and the fifth information.

For example, the N quantized parameters of the first model include the N weight gradients obtained by performing the $Q^{th}$ round of training on the first model and performing quantization by the first apparatus. Specifically, the N weight gradients of the first model are represented by the vector $\Delta w_Q$ In other words, the vector $\Delta w_Q$ includes the N weight gradients obtained by performing the $Q^{th}$ round of training on the first model by the first apparatus. N quantized parameters of the second model include N weight gradients obtained by performing the $R^{th}$ round of training on the second model and performing quantization by the second apparatus. Specifically, the N weight gradients of the second model are represented by the vector $\Delta w_R$. In other words, the vector $\Delta w_R$ includes the N weight gradients obtained by performing a $Q^{th}$ round of training on the second model by the second apparatus. Therefore, the second apparatus may determine the global learning rate $\eta$ = mean(mean (abs ($\Delta w_q$)), mean(abs($\Delta w_r$))). The vector $\Delta w_q$ includes a quantized non-0 weight parameter in the vector $\Delta w_Q$. The vector $\Delta w_r$ includes a quantized non-0 weight gradient in the vector $\Delta w_R$.

It should be noted that, optionally, the first apparatus may send the sixth information to the second apparatus. The sixth information indicates the absolute value of the value of the quantized non-0 parameter in the N parameters of the first model. The third apparatus sends seventh information to the second apparatus. The seventh information indicates an average value of absolute values of values of quantized non-0 parameters in the N parameters of the second model. The second apparatus determines the global learning rate based on the sixth information and the seventh information.

For example, the N quantized parameters of the first model include the N weight gradients obtained by performing the $Q^{th}$ round of training on the first model and performing quantization by the first apparatus. Specifically, the N weight gradients of the first model are represented by the vector $\Delta w_Q$ In other words, the vector $\Delta w_Q$ includes the N weight gradients obtained by performing the $Q^{th}$ round of training on the first model by the first apparatus. The N quantized parameters of the second model include the N weight gradients obtained by performing the $R^{th}$ round of training on the second model and performing quantization by the second apparatus. Specifically, the N weight gradients of the second model are represented by the vector $\Delta w_R$. In other words, the vector $\Delta w_R$ includes the N weight gradients obtained by performing the $Q^{th}$ round of training on the second model by the second apparatus. The first apparatus indicates, to the second apparatus based on the sixth information, an average value mean(abs($\Delta w_q$)) of absolute values of values of quantized non-0 weight gradients in the vector $\Delta w_Q$. The third apparatus indicates, to the second apparatus based on the seventh information, an average value mean (abs($\Delta w_r$)) of absolute values of values of quantized non-0 weight gradients in the vector $\Delta w_R$. Therefore, the second apparatus may determine the global learning rate $\eta$ = mean(mean (abs($\Delta w_q$)), mean (abs($\Delta w_r$))).

205: The second apparatus sends fourth information to the first apparatus. The fourth information indicates the global information of the first model determined by the second apparatus. Correspondingly, the first apparatus receives the fourth information from the second apparatus.

The fourth information includes the global information of the first model determined by the second apparatus. Alternatively, the fourth information indicates the global information of the first model determined by the second apparatus. For example, the second apparatus encodes or modulates the global information of the first model, to obtain the fourth information, and indicates the global information of the first model to the first apparatus based on the fourth information. For the global information of the first model, refer to the foregoing related descriptions.

For example, the fourth information includes the N global weight gradients of the first model that are determined by the second apparatus. The N global weight gradients are represented by a vector A. Therefore, the first apparatus may update the weight parameter of the first model to $w_Q = w_{Q-1} + \eta * A$. $w_{Q-1}$ indicates a global weight parameter of the first model obtained by performing a $(Q-1)^{th}$ round of updating on the first model by the first apparatus. $w_Q$ indicates a global weight parameter of the first model obtained by performing a $Q^{th}$ round of updating on the first model by the first apparatus. $\eta$ indicates the global learning rate.

For example, the fourth information includes N global output parameters of the first model that are determined by the second apparatus. The first apparatus may perform the $(Q+1)^{th}$ round of training on the first model, to obtain the N actual output parameters of the first model. The first apparatus trains the first model based on the N actual output parameters and the N global output parameters, to obtain the weight parameter of the first model.

Optionally, the embodiment shown in FIG. 2 further includes step 201d. Step 201d may be performed before step 203.

201d: The second apparatus sends first indication information to the first apparatus. The first indication information indicates a quantity L of sending times that the first apparatus sends the first information to the second apparatus. Correspondingly, the first apparatus receives the first indication information from the second apparatus. L is an integer greater than or equal to 1.

Based on step 201d above, optionally, step 203 above specifically includes: The first apparatus sends the first information to the second apparatus L times. Correspondingly, the second apparatus receives the first information from the first apparatus L times.

In this implementation, the second apparatus may indicate the first apparatus to repeatedly send the first information to the second apparatus a plurality of times. It can be learned from the related descriptions of step 204 above that an energy-based gradient decision of the second apparatus may be incorrect due to channel noise and randomness of incoherent superimposition of signals. Therefore, the first apparatus repeatedly sends the first information. This helps the second apparatus select a decision result with a largest quantity of occurrences as a best decision result after separately making decisions, thereby reducing a probability of a decision error, and improving model training performance.

For example, as shown in FIG. 3, after performing quantization on the N parameters of the first model, the first apparatus obtains the N quantized parameters of the first model. The first apparatus modulates the N quantized parameters of the first model. The first apparatus may map, based on the quantity L of sending times, the sequence obtained through modulation to the corresponding time-frequency resource, and perform waveform shaping, to obtain a corresponding first signal. The first apparatus sends the first signal to the second apparatus. For example, L is equal to 2, and the first apparatus may repeatedly map the sequence obtained through modulation to the corresponding time-frequency resource twice.

It should be noted that, optionally, the quantity L of sending times may be set based on at least one factor of a model training phase, a quantity of users participating in model training, and a signal-to-noise ratio of a channel. For example, in a later phase of training, when the quantity of users participating in model training is small and the signal-to-noise ratio is low, the quantity of sending times may be large.

It should be noted that the foregoing describes the technical solutions of this application by using an example in which the second apparatus determines the global learning rate based on the first information. The second apparatus may determine the global learning rate based on the first information and/or the third information. This is not specifically limited in this application.

It should be noted that the embodiment shown in FIG. 2 describes a solution in which the second apparatus determines the at least one quantization threshold based on the second information and the third information. In actual application, the second apparatus may send the third information to the first apparatus. The first apparatus determines the at least one quantization threshold based on the second information and the third information. This is not specifically limited in this application.

This application further provides another embodiment. The embodiment is similar to the embodiment shown in FIG. 2, and a difference lies in step 204. Step 204 above is replaced with step 2004a. This embodiment further includes step 2004b and step 2004c. Step 2004b and step 2004c may be performed before step 205.

2004a: A second apparatus sends first information to a fourth apparatus. Correspondingly, the fourth apparatus receives the first information from the second apparatus.

For the first information, refer to related descriptions of step 203 in the embodiment shown in FIG. 2. For example, the second apparatus is a network device, and the fourth apparatus is a server. The server may receive the first information sent from the network device.

2004b: The fourth apparatus determines global information of a first model based on the first information.

Step 2004b is similar to step 204 in the embodiment shown in FIG. 2 above. For details, refer to related descriptions of step 204 in the embodiment shown in FIG. 2 above.

Optionally, this embodiment further includes step 2004d, and step 2004d may be performed before step 2004b.

2004d: The second apparatus sends fifth information to the fourth apparatus. Correspondingly, the fourth apparatus receives the fifth information from the second apparatus.

For the fifth information, refer to related descriptions of step 203a in the embodiment shown in FIG. 2.

It should be noted that there is no fixed execution sequence between step 2004a and step 2004d. Step 2004a may be performed before step 2004d; or step 2004d may be performed before step 2004a; or step 2004a and step 2004d may be simultaneously performed based on a situation.

2004c: The fourth apparatus sends fourth information to the second apparatus, where the fourth information indicates the determined global information of a second model. Correspondingly, the second apparatus receives the fourth information from the fourth apparatus.

For the fourth information, refer to related descriptions of step 205 in the embodiment shown in FIG. 2. Details are not described herein again.

It should be noted that the first apparatus may be a first terminal device. The second apparatus may be a network device. The third apparatus may be a second terminal device. The fourth apparatus may be a server. The foregoing embodiment describes a process in which the server obtains the related information that is of the model of the terminal device and that is managed by the network device, and determines the global information of the first model with reference to the related information of the model. In actual application, the server may obtain related information that is of the model of the terminal device and that is respectively managed by a plurality of network devices, and determine the global information of the first model with reference to the related information of the model. This is not specifically limited in this application.

The following describes, with reference to FIG. 4, a possible implementation in which a second apparatus determines a common sparse mask.

FIG. 4 is a diagram of an embodiment of a communication method according to embodiments of this application. Refer to FIG. 4. The method includes the following steps.

401: A first apparatus sends third indication information to a second apparatus. The third indication information indicates indexes of N parameters whose absolute values of corresponding values are largest and that are in K parameters obtained by performing one round of training on a first model by the first apparatus. Correspondingly, the second apparatus receives the third indication information from the first apparatus.

The K parameters of the first model are obtained by performing one round of training on the first model by the first apparatus. The first apparatus determines the N parameters whose absolute values of the corresponding values are largest and that are in the K parameters. Then, the first apparatus sends the third indication information to the second apparatus.

Optionally, the third indication information is a bit sequence, the bit sequence includes K bits, and the K bits one-to-one correspond to the K parameters of the first model. When a value of one bit in the bit sequence is 0, it indicates that the first apparatus does not indicate a parameter corresponding to the bit. When a value of one bit in the bit sequence is 1, it indicates that the first apparatus indicates a parameter corresponding to the bit. For a related example of the bit sequence, refer to related descriptions in FIG. 5 below.

402: A third apparatus sends fourth indication information to the second apparatus. The fourth indication information indicates indexes of N parameters whose absolute values of corresponding values are largest and that are in K parameters of a second model of the second apparatus. Correspondingly, the second apparatus receives the fourth indication information from the first apparatus.

The K parameters of the second model are obtained by performing one round of training on the second model by the third apparatus. The third apparatus determines the N parameters whose absolute values of corresponding values are largest and that are in the K parameters of the second model. Then, the third apparatus sends the fourth indication information to the second apparatus.

Optionally, a form of the fourth indication information is similar to that of the third indication information. For details, refer to related descriptions of step 401 above. Details are not described herein again.

403: The second apparatus determines a common sparse mask based on the third indication information and the fourth indication information.

For the common sparse mask, refer to related descriptions in the embodiment shown in FIG. 2 above. Details are not described herein again.

It should be noted that FIG. 4 above describes the process in which the second apparatus determines the common sparse mask based on the third indication information and the fourth indication information. In actual application, the second apparatus may receive indication information that is sent by each of a plurality of apparatuses and that indicates N parameters whose absolute values of corresponding values are largest and that are in K parameters of a model of the apparatus. Then, the second apparatus determines the common sparse mask based on indication information of the plurality of apparatuses.

For example, as shown in FIG. 5, a network device may receive, from each of a plurality of terminal devices, indication information that indicates N parameters whose absolute values of corresponding values are largest and that are in K parameters of a model of the terminal device. As shown in FIG. 5, a first terminal device sends a first bit sequence to the network device, and the first bit sequence is 110010100. Each bit in the first bit sequence corresponds to one of K parameters of a model of the first terminal device, that is, K is equal to 9. For example, a $1^{st}$ bit in the first bit sequence corresponds to a $1^{st}$ parameter in the K parameters, a $2^{nd}$ bit corresponds to a $2^{nd}$ parameter in the K parameters, and by analogy, and a last bit corresponds to a last parameter in the K parameters. Parameters corresponding to bits whose values are 1 in the first bit sequence are four parameters whose absolute values of corresponding values are largest and that are in the nine parameters. The first terminal device indicates indexes of the four parameters to the network device based on the first bit sequence.

This is also similar for a second terminal device and a third terminal device. For example, the second terminal device sends a second bit sequence to the network device, and the second bit sequence is 101000101. Each bit in the second bit sequence corresponds to one of K parameters of a model of the second terminal device, that is, K is equal to 9. Parameters corresponding to bits whose values are 1 in the second bit sequence are four parameters whose absolute values of corresponding values are largest and that are in the nine parameters. The second terminal device indicates indexes of the four parameters to the network device based on the second bit sequence. The third terminal device sends a third bit sequence to the network device, and the third bit sequence is 110001001. Each bit in the third bit sequence corresponds to one of K parameters of a model of the third terminal device, that is, K is equal to 9. Parameters corresponding to bits whose values are 1 in the third bit sequence are four parameters whose absolute values of corresponding values are largest and that are in the nine parameters. The third terminal device indicates indexes of the four parameters to the network device based on the third bit sequence. Optionally, the network device determines the common sparse mask based on the first bit sequence, the second bit sequence, and the third bit sequence. As shown in FIG. 5, the common sparse mask is a bit sequence, and is specifically 110001101. The network device indicates, based on the bit sequence, the terminal device to report a model parameter corresponding to a bit whose value is 1 in the bit sequence. This reduces overheads for reporting the model parameter by the terminal device, and saves communication resources.

The foregoing method embodiments may be implemented separately or together. For terms and related technologies in embodiments, refer to each other. In other words, technical solutions that do not conflict with each other or that do not logically conflict with each other in different embodiments may be combined with each other. This is not specifically limited in this application.

The following describes a first apparatus provided in embodiments of this application. FIG. 6 is a diagram of a structure of a first apparatus according to an embodiment of this application. The first apparatus 600 may be configured to perform the steps performed by the first apparatus in the embodiments shown in FIG. 2 and FIG. 4. For details, refer to related descriptions in the foregoing method embodiments.

The first apparatus 600 includes a transceiver module 601 and a processing module 602.

The transceiver module 601 is configured to receive at least one quantization threshold from a second apparatus.

The processing module 602 is configured to perform quantization on related information of a first model of the first apparatus 600 based on the at least one quantization threshold.

The transceiver module 601 is further configured to send first information to the second apparatus, where the first information indicates quantized related information of the first model.

In a possible implementation, the related information of the first model includes an output parameter or an update parameter of the first model, and the update parameter includes a weight gradient or a weight parameter of the first model.

In another possible implementation, the transceiver module 601 is further configured to:

send second information to the second apparatus, where the second information indicates information obtained by processing the related information of the first model, or

the second information indicates information obtained by processing related information obtained by performing an $M^{th}$ round of training on the first model by the first apparatus 600, and the related information of the first model is related information obtained by performing a $Q^{th}$ round of training on the first model by the first apparatus 600, where M is an integer greater than or equal to 1 and less than Q, and Q is an integer greater than 1.

In another possible implementation, the related information of the first model includes the output parameter of the first model, and the information obtained by processing the related information of the first model includes an average value of absolute values of values of output parameters of the first model; or
the related information of the first model includes the update parameter of the first model, and the information obtained by processing the related information of the first model includes an average value of absolute values of values of update parameters of the first model.

In another possible implementation, the transceiver module 601 is further configured to:
receive third information from the second apparatus, where the third information indicates global information of the first model.

In another possible implementation, the global information of the first model includes a global output parameter of the first model, or the global information of the first model includes a global update parameter and/or a global learning rate of the first model.

In another possible implementation, the related information of the first model includes N parameters of the first model, where N is an integer greater than or equal to 1. The processing module 602 is specifically configured to:
perform quantization on the N parameters based on the at least one quantization threshold, to obtain N quantized parameters.

The transceiver module 601 is specifically configured to:

modulate the N quantized parameters, to obtain N first signals; and
send the N first signals to the second apparatus.

In another possible implementation, the at least one quantization threshold includes a first quantization threshold and a second quantization threshold. The processing module 602 is specifically configured to:

if an $i^{th}$ parameter in the N parameters is greater than the first quantization threshold, quantize the $i^{th}$ parameter to a first value, where i is an integer greater than or equal to 1 and less than or equal to N; or

if an $i^{th}$ parameter in the N parameters is less than or equal to the first quantization threshold and is greater than or equal to the second quantization threshold, quantize the $i^{th}$ parameter to a second value; or

if an $i^{th}$ parameter in the N parameters is less than the second quantization threshold, quantize the $i^{th}$ parameter to a third value.

In another possible implementation, the transceiver module 601 is specifically configured to:
modulate an $i^{th}$ quantized parameter, to obtain an $i^{th}$ first signal, where the $i^{th}$ first signal corresponds to two sequences.

When the $i^{th}$ quantized parameter is the first value, a transmit power at which the first apparatus 600 sends a $1^{st}$ sequence in the two sequences is less than a transmit power at which the first apparatus 600 sends a $2^{nd}$ sequence in the two sequences; when the $i^{th}$ quantized parameter is the second value, a transmit power at which the first apparatus 600 sends a $1^{st}$ sequence in the two sequences is equal to a transmit power at which the first apparatus 600 sends a $2^{nd}$ sequence in the two sequences; or when the $i^{th}$ quantized parameter is the third value, a transmit power at which the first apparatus 600 sends a $1^{st}$ sequence in the two sequences is greater than a transmit power at which the first apparatus 600 sends a $2^{nd}$ sequence in the two sequences.

In another possible implementation, when the $i^{th}$ quantized parameter is the first value, the $1^{st}$ sequence in the two sequences is a non-all-0 sequence, and the $2^{nd}$ sequence is an all-0 sequence, when the $i^{th}$ quantized parameter is the second value, the two sequences are both all-0 sequences; or when the $i^{th}$ quantized parameter is the third value, the $1^{st}$ sequence in the two sequences is an all-0 sequence, and the $2^{nd}$ sequence is a non-all-0 sequence.

In another possible implementation, the transceiver module 601 is specifically configured to:
send the first information to the second apparatus L times, where L is an integer greater than or equal to 1.

In another possible implementation, the transceiver module 601 is further configured to:
receive first indication information from the second apparatus, where the first indication information indicates the quantity L of sending times that the first apparatus 600 sends the first information to the second apparatus.

In another possible implementation, the related information of the first model includes N parameters of the first model that are obtained through quantization error compensation, the N parameters obtained through quantization error compensation are obtained by performing error compensation for N parameters by the first apparatus 600 based on quantization errors respectively corresponding to the N parameters obtained by performing the $Q^{th}$ round of training on the first model by the first apparatus 600, and a quantization error corresponding to the $i^{th}$ parameter in the N parameters is determined based on an $i^{th}$ parameter obtained by performing a $(Q-1)^{th}$ round of training on the first model by the first apparatus 600 and an $i^{th}$ parameter obtained through quantization error compensation and the $(Q-1)^{th}$ round of training, where i is an integer greater than or equal to 1 and less than or equal to N, N is an integer greater than or equal to 1, and Q is an integer greater than 1.

In another possible implementation, the related information of the first model includes N parameters of the first model that are obtained through sparsification, the N parameters of the first model that are obtained through sparsification are N parameters selected by the first apparatus 600 from K parameters of the first model based on a common sparse mask, and the K parameters of the first model are parameters obtained by performing one round of training on the first model by the first apparatus 600, where K is an integer greater than or equal to N, K is an integer greater than or equal to 1, and N is an integer greater than or equal to 1.

In another possible implementation, the common sparse mask is a bit sequence, the bit sequence includes K bits, and the K bits one-to-one correspond to the K parameters. When a value of one bit in the K bits is 0, it indicates the first apparatus 600 not to select a parameter corresponding to the bit; or when a value of one bit in the K bits is 1, it indicates the first apparatus 600 to select a parameter corresponding to the bit.

In another possible implementation, the common sparse mask is determined by the first apparatus 600 based on a sparsity ratio and a pseudo-random number, and the sparsity ratio is indicated by the second apparatus to the first apparatus 600.

In another possible implementation, the transceiver module 601 is further configured to:
receive second indication information from the second apparatus, where the second indication information indicates the common sparse mask.

In another possible implementation, the transceiver module 601 is further configured to:
send third indication information to the second apparatus, where the third indication information indicates indexes of the N parameters whose absolute values of corresponding values are largest and that are in the K parameters.

In another possible implementation, the first model is a neural network model, and the related information of the first model includes related parameters of neurons at P layers of the neural network model, where P is an integer greater than or equal to 1.

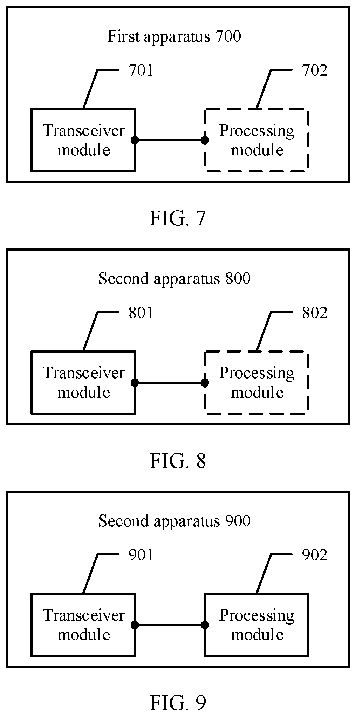

FIG. 7 is a diagram of another structure of a first apparatus according to an embodiment of this application. As shown in FIG. 7, the first apparatus 700 may be configured to perform the steps performed by the first apparatus in the embodiment shown in FIG. 4. For details, refer to related descriptions in the foregoing method embodiment.

The first apparatus 700 includes a transceiver module 701. Optionally, the first apparatus 700 further includes a processing module 702.

The transceiver module 701 is configured to: send first indication information to a second apparatus, where the first indication information indicates indexes of N parameters whose absolute values of corresponding values are largest and that are in K parameters of a first model of the first apparatus 700, and the K parameters of the first model are K parameters obtained by performing one round of training on the first model by the first apparatus 700, where K is an integer greater than or equal to N, K is an integer greater than or equal to 1, and N is an integer greater than or equal to 1; and receive second indication information from the second apparatus, where the second indication information indicates a common sparse mask, the common sparse mask is determined by the second apparatus based on the first indication information, and the common sparse mask indicates the first apparatus 700 to report some parameters obtained by training the first model by the first apparatus.

The following describes a second apparatus provided in embodiments of this application. FIG. 8 is a diagram of a structure of a second apparatus according to an embodiment of this application. The second apparatus 800 may be configured to perform the steps performed by the second apparatus in the embodiments shown in FIG. 2 and FIG. 4. For details, refer to related descriptions in the foregoing method embodiments.

The second apparatus 800 includes a transceiver module 801. Optionally, the second apparatus 800 further includes a processing module 802.

The transceiver module 801 is configured to: send at least one quantization threshold to a first apparatus, where the at least one quantization threshold is used to perform quantization on related information of a first model of the first apparatus; and receive first information sent from the first apparatus, where the first information indicates quantized related information of the first model.

In a possible implementation, the related information of the first model includes an output parameter or an update parameter of the first model, and the update parameter includes a weight gradient or a weight parameter of the first model.

In another possible implementation, the transceiver module 801 is further configured to:

receive second information from the first apparatus, where the second information indicates information obtained by processing the related information of the first model; or

the second information indicates information obtained by performing an $M^{th}$ round of training on the first model and performing processing by the first apparatus, and the related information of the first model is related information obtained by performing a $Q^{th}$ round of training on the first model by the first apparatus, where M is an integer greater than or equal to 1 and less than Q, and Q is an integer greater than 1.

The processing module 802 is configured to determine the at least one quantization threshold based on the second information.

In another possible implementation, the related information of the first model includes the output parameter of the first model, and the information obtained by processing the related information of the first model includes an average value of absolute values of values of output parameters of the first model; or

the related information of the first model includes the update parameter of the first model, and the information obtained by processing the related information of the first model includes an average value of absolute values of values of update parameters of the first model.

In another possible implementation, the transceiver module 801 is further configured to:

receive third information from a third apparatus, where the third information indicates information obtained by processing related information of a second model of the third apparatus, or the third information indicates information obtained by performing an $S^{th}$ round of training on the second model and performing processing by the third apparatus, and the related information of the second model is related information obtained by performing an $R^{th}$ round of training on the second model by the third apparatus, where S is an integer greater than or equal to 1 and less than R, and R is an integer greater than 1.

The processing module 802 is configured to determine the at least one quantization threshold based on the second information and the third information.

In another possible implementation, the processing module 802 is further configured to:

determine global information of the first model based on the first information.

The transceiver module 801 is further configured to:

send fourth information to the first apparatus, where the fourth information indicates the global information of the first model.

In another possible implementation, the global information of the first model includes a global output parameter of the first model, or the global information of the first model includes a global update parameter and/or a global learning rate of the first model.

In another possible implementation, the transceiver module 801 is further configured to:

receive fifth information from the third apparatus, where the fifth information indicates the related information of the second model of the third apparatus.

The processing module 802 is specifically configured to:
determine the global information of the first model based on the first information and the fifth information.

In another possible implementation, the related information of the first model includes N parameters of the first model, where N is an integer greater than or equal to 1. The related information of the second model includes N parameters of the second model.

The transceiver module 801 is specifically configured to:
receive N first signals from the first apparatus, where the N first signals carry the N parameters of the first model, and the N first signals one-to-one correspond to the N parameters of the first model.

The transceiver module 801 is specifically configured to:
receive N second signals from the third apparatus, where the N second signals carry N parameters of the second model, and the N second signals one-to-one correspond to the N parameters of the second model.

The processing module 802 is specifically configured to:
determine the global information of the first model based on the N first signals and the N second signals.

In another possible implementation, an $i^{th}$ first signal in the N first signals corresponds to a first sequence and a second sequence, an $i^{th}$ second signal in the N second signals corresponds to a third sequence and a fourth sequence, a time-frequency resource used by the first apparatus to send the first sequence is the same as a time-frequency resource used by the third apparatus to send the third sequence, a time-frequency resource used by the first apparatus to send the second sequence is the same as a time-frequency resource used by the third apparatus to send the fourth sequence, and the global information of the first model includes N global parameters of the first model, where i is an integer greater than or equal to 1 and less than or equal to N. The processing module 802 is specifically configured to:

determine a first signal energy sum of the first sequence and the third sequence that are received by the second apparatus 800;
determine a second signal energy sum of the second sequence and the fourth sequence that are received by the second apparatus 800; and
determine an $i^{th}$ global parameter in the N global parameters based on the first signal energy sum and the second signal energy sum.

In another possible implementation, the processing module 802 is specifically configured to:

if the first signal energy sum is less than a sum of the second signal energy sum and a decision threshold, determine a value of the $i^{th}$ global parameter as a first value; or
if the first signal energy sum is greater than or equal to a sum of the second signal energy sum and the decision threshold, and the second signal energy sum is less than or equal to a sum of the first signal energy sum and the decision threshold, determine a value of the $i^{th}$ global parameter as a second value; or
if the second signal energy sum is greater than a sum of the first signal energy sum and the decision threshold, determine a value of the $i^{th}$ global parameter as a third value.

In another possible implementation, the transceiver module 801 is further configured to:
send first indication information to the first apparatus, where the first indication information indicates a quantity L of sending times that the first apparatus sends the first information to the second apparatus 800, where L is an integer greater than or equal to 1.

In another possible implementation, the transceiver module 801 is further configured to:
send second indication information to the first apparatus, where the second indication information indicates a common sparse mask, and the common sparse mask indicates the first apparatus to report some parameters obtained by training the first model by the first apparatus.

In another possible implementation, the transceiver module 801 is further configured to:

receive third indication information from the first apparatus, where the third indication information indicates indexes of N parameters whose absolute values of corresponding values are largest and that are in K parameters obtained by performing one round of training on the first model by the first apparatus; and
receive fourth indication information from the third apparatus, where the fourth indication information indicates indexes of N parameters whose absolute values of corresponding values are largest and that are in K parameters of the second model of the third apparatus, and the K parameters of the second model are K parameters obtained by performing one round of training on the second model by the third apparatus.

The processing module 802 is further configured to:
determine the common sparse mask based on the third indication information and the fourth indication information.

FIG. 9 is a diagram of another structure of a second apparatus according to an embodiment of this application. As shown in FIG. 9, the second apparatus 900 may be configured to perform the steps performed by the second apparatus in the embodiment shown in FIG. 4. For details, refer to related descriptions in the foregoing method embodiment.

The second apparatus 900 includes a transceiver module 901 and a processing module 902.

The transceiver module 901 is configured to receive first indication information from a first apparatus, where the first indication information indicates indexes of N parameters whose absolute values of corresponding values are largest and that are in K parameters of a first model of the first apparatus, and the K parameters of the first model are K parameters obtained by performing one round of training on the first model by the first apparatus, where K is an integer greater than or equal to N, K is an integer greater than or equal to 1, and N is an integer greater than or equal to 1.

The processing module 902 is configured to determine a common sparse mask based on the first indication information, where the common sparse mask indicates the first apparatus to report some parameters obtained by training the first model by the first apparatus.

The transceiver module 901 is further configured to send second indication information to the first apparatus, where the second indication information indicates the common sparse mask.

In a possible implementation, the transceiver module 901 is further configured to:
receive third indication information from a third apparatus, where the third indication information indicates indexes of N parameters whose absolute values of corresponding values are largest and that are in K parameters of a second model of the third apparatus, and the K parameters of the second model are K parameters obtained by performing one round of training on the second model by the third apparatus.

The processing module 902 is specifically configured to:
determine the common sparse mask based on the first indication information and the third indication information.

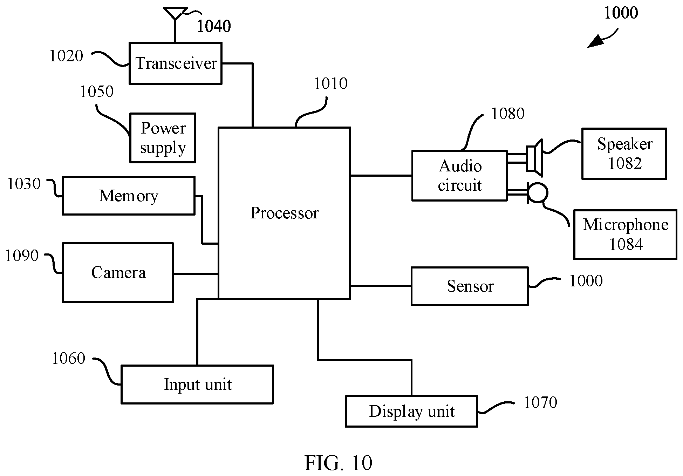

An embodiment of this application further provides a terminal device. FIG. 10 is a diagram of a structure of a terminal device 1000 according to an embodiment of this application. The terminal device 1000 may be used in the system shown in FIG. 1. For example, the terminal device 1000 may be the terminal device in the system shown in FIG. 1, and is configured to perform functions of the first apparatus or the second apparatus in the foregoing method embodiments.

As shown in the figure, the terminal device 1000 includes a processor 1010 and a transceiver 1020. Optionally, the terminal device 1000 further includes a memory 1030. The processor 1010, the transceiver 1020, and the memory 1030 may communicate with each other through an internal connection path, to transfer a control signal and/or a data signal. The memory 1030 is configured to store a computer program. The processor 1010 is configured to invoke the computer program from the memory 1030 and run the computer program, to control the transceiver 1020 to send or receive a signal. Optionally, the terminal device 1000 may further include an antenna 1040, configured to send, via a radio signal, uplink data or uplink control signaling output by the transceiver 1020.

The processor 1010 and the memory 1030 may be integrated into one processing apparatus. The processor 1010 is configured to execute program code stored in the memory 1030, to implement the foregoing functions. During specific implementation, the memory 1030 may alternatively be integrated into the processor 1010, or may be independent of the processor 1010. For example, the processor 1010 may correspond to the processing module 602 in FIG. 6. Alternatively, the processor 1010 may correspond to the processing module 702 in FIG. 7. Alternatively, the processor 1010 may correspond to the processing module 802 in FIG. 8. Alternatively, the processor 1010 may correspond to the processor 902 in FIG. 9.

The transceiver 1020 may correspond to the transceiver module 601 in FIG. 6. Alternatively, the transceiver 1002 may correspond to the transceiver module 701 in FIG. 7. Alternatively, the transceiver 1002 may correspond to the transceiver module 801 in FIG. 8. Alternatively, the transceiver 1002 may correspond to the transceiver module 901 in FIG. 9. The transceiver 1020 may also be referred to as a transceiver unit. The transceiver 1020 may include a receiver (or referred to as a receiver machine or a receiver circuit) and a transmitter (or referred to as a transmitter machine or a transmitter circuit). The receiver is configured to receive a signal, and the transmitter is configured to transmit a signal.

It should be understood that the terminal device 1000 shown in FIG. 10 can implement processes of the first apparatus or the second apparatus in the method embodiments shown in FIG. 2 and FIG. 4. Operations and/or functions of the modules in the terminal device 1000 are separately intended to implement corresponding procedures in the foregoing apparatus embodiments. For details, refer to the descriptions in the foregoing apparatus embodiments. To avoid repetition, detailed descriptions are appropriately omitted herein.

The processor 1010 may be configured to perform an action implemented inside the first apparatus or the second apparatus described in the foregoing apparatus embodiments, and the transceiver 1020 may be configured to perform a receiving or sending action of the first apparatus or the second apparatus described in the foregoing apparatus embodiments. For details, refer to the descriptions in the foregoing apparatus embodiments. Details are not described herein again.

Optionally, the terminal device 1000 may further include a power supply 1050, configured to supply power to various devices or circuits in the terminal device.

In addition, to improve functions of the terminal device, the terminal device 1000 may further include one or more of an input unit 1060, a display unit 1070, an audio circuit 1080, a camera 1090, a sensor 1000, and the like, and the audio circuit may further include a speaker 1082, a microphone 1084, and the like.

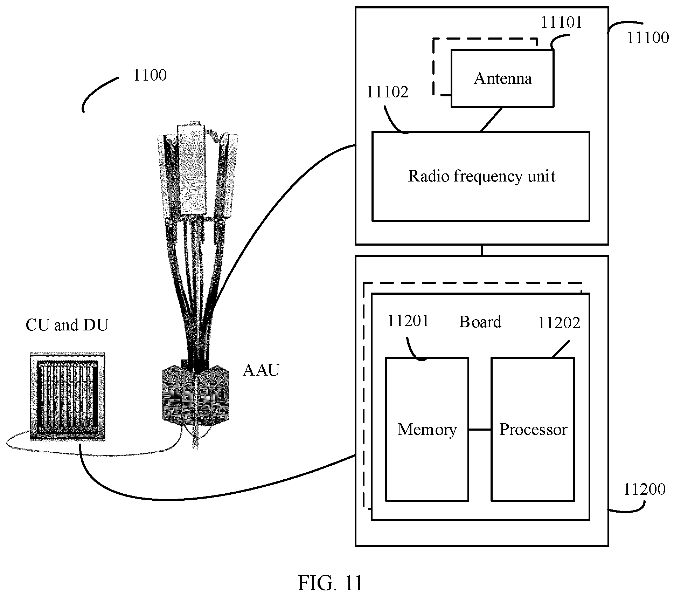

This application further provides a network device. FIG. 11 is a diagram of a structure of a network device 1100 according to an embodiment of this application. The network device 1100 may be used in the system shown in FIG. 1. For example, the network device 1100 may be the network device in the system shown in FIG. 1, and is configured to perform functions of the first apparatus or the second apparatus in the foregoing method embodiments. It should be understood that the following is merely an example. In a future communication system, the network device may have another form and composition.

For example, in a 5G communication system, the network device 1100 may include a CU, a DU, and an AAU. Compared with a network device in an LTE communication system that includes one or more radio frequency units, for example, a remote radio unit (remote radio unit, RRU) and one or more baseband units (base band unit, BBU), in the network device 1100, a non-real-time part of the original BBU is split off and redefined as the CU that is responsible for processing a non-real-time protocol and service, some physical layer processing functions of the BBU are combined with the original RRU and a passive antenna into the AAU, and remaining functions of the BBU are redefined as the DU that is responsible for processing a physical layer protocol and a real-time service. In short, the CU and the DU are distinguished based on real-time performance of processed content, and the AAU is a combination of the RRU and the antenna.

The CU, the DU, and the AAU may be deployed separately or together. Therefore, there may be a plurality of network deployment forms. A possible deployment form, as shown in FIG. 11, is consistent with that of a conventional 4G network device. The CU and the DU are deployed on same hardware. It should be understood that FIG. 11 is merely an example, and constitutes no limitation on the protection scope of this application. For example, a deployment form may alternatively be that DUs are deployed in a BBU equipment room, CUs or DUs are deployed together, or CUs are centralized at a higher level.

The AAU 11100 may implement a transceiver function, is referred to as a transceiver unit 11100, and corresponds to the transceiver module 601 in FIG. 6. Alternatively, the AAU 11100 may implement a transceiver function, is referred to as a transceiver unit 11100, and corresponds to the transceiver module 701 in FIG. 7. Alternatively, the AAU 11100 may implement a transceiver function, is referred to as a transceiver unit 11100, and corresponds to the transceiver module 801 in FIG. 8. Alternatively, the AAU 11100 may implement a transceiver function, is referred to as a transceiver unit 11100, and corresponds to the transceiver module 901 in FIG. 9. Optionally, the transceiver unit 11100 may also be referred to as a transceiver machine, a transceiver circuit, a transceiver, or the like, and may include at least one antenna 11101 and a radio frequency unit 11102. Alternatively, the transceiver unit 11100 may include a receiving unit and a sending unit. The receiving unit may correspond to a receiver (or referred to as a receiver machine or a receiver circuit), and the sending unit may correspond to a transmitter (or referred to as a transmitter machine or a transmitter circuit).

The CU and DU 11200 may implement an internal processing function, are referred to as a processing unit 11200, and correspond to the processing module 602 in FIG. 6. Alternatively, the CU and DU 11200 may implement an internal processing function, are referred to as a processing unit 11200, and correspond to the processing module 702 in FIG. 7. The CU and DU 11200 may implement an internal processing function, are referred to as a processing unit 11200, and correspond to the processing module 802 in FIG. 8. Alternatively, the CU and DU 11200 may implement an internal processing function, are referred to as a processing unit 11200, and correspond to the processing module 902 in FIG. 9. Optionally, the processing unit 11200 may control the network device or the like, and may be referred to as a controller. The AAU, the CU, and the DU may be physically disposed together, or may be physically disposed separately.

In addition, the network device is not limited to the form shown in FIG. 11, and may alternatively be in another form, for example, may include a BBU and an adaptive radio unit (adaptive radio unit, ARU), or include a BBU and an active antenna unit (active antenna unit, AAU); or may be customer-premises equipment (customer-premises equipment, CPE); or may be in another form. This is not limited in this application.

In an example, the processing unit 11200 may include one or more boards. A plurality of boards may jointly support a radio access network (such as an LTE network) of a single access standard, or may separately support radio access networks (such as an LTE network, a 5G network, a future network, or another network) of different access standards. The CU and DU 11200 further include a memory 11201 and a processor 11202. The memory 11201 is configured to store necessary instructions and data. The processor 11202 is configured to control the network device to perform a necessary action, for example, configured to control the network device to perform an operation procedure related to the first apparatus or the second apparatus in the foregoing method embodiments. The memory 11201 and the processor 11202 may serve one or more boards. In other words, a memory and a processor may be disposed on each board. Alternatively, a plurality of boards may share a same memory and a same processor. In addition, a necessary circuit may further be disposed on each board.

It should be understood that the network device 1100 shown in FIG. 11 can implement functions of the first apparatus or the second apparatus in the method embodiments in FIG. 2 and FIG. 4. Operations and/or functions of units in the network device 1100 are separately intended to implement corresponding procedures performed by the network device in the method embodiments of this application. To avoid repetition, detailed descriptions are appropriately omitted herein. The structure of the network device shown in FIG. 11 is merely a possible form, and should not constitute any limitation on embodiments of this application. According to this application, there may be a network device structure in another form in the future.

The CU and DU 11200 may be configured to perform an action implemented inside the first apparatus or the second apparatus described in the foregoing method embodiments, and the AAU 11100 may be configured to perform a receiving or sending action of the first apparatus or the second apparatus described in the foregoing method embodiments. For details, refer to the descriptions in the foregoing method embodiments. Details are not described herein again.

This application further provides a computer program product. The computer program product includes computer program code. When the computer program code is run on a computer, the computer is enabled to perform the method in either of the embodiments shown in FIG. 2 and FIG. 4.

This application further provides a computer-readable medium. The computer-readable medium stores program code. When the program code is run on a computer, the computer is enabled to perform the method in either of the embodiments shown in FIG. 2 and FIG. 4.

This application further provides a communication system. The communication system includes a first apparatus and a second apparatus. The first apparatus is configured to perform some or all steps performed by the first apparatus in the embodiments shown in FIG. 2 and FIG. 4, and the second apparatus is configured to perform some or all steps performed by the second apparatus in the embodiments shown in FIG. 2 and FIG. 4.

Optionally, the communication system further includes a third apparatus. The third apparatus is configured to perform some or all steps performed by the third apparatus in the embodiments shown in FIG. 2 and FIG. 4.

An embodiment of this application further provides a chip apparatus, including a processor. The processor is configured to invoke a computer program or computer instructions stored in a memory, so that the processor performs the methods in the embodiments shown in FIG. 2 and FIG. 4.

In a possible implementation, an input of the chip apparatus corresponds to a receiving operation in the embodiments shown in FIG. 2 and FIG. 4, and an output of the chip apparatus corresponds to a sending operation in the embodiments shown in FIG. 2 and FIG. 4.

Optionally, the processor is coupled to the memory through an interface.

Optionally, the chip apparatus further includes the memory, and the memory stores the computer program or the computer instructions.

The processor mentioned anywhere above may be a general-purpose central processing unit, a microprocessor, an application-specific integrated circuit (application-specific integrated circuit, ASIC), or one or more integrated circuits configured to control program execution of the methods in the embodiments shown in FIG. 2 and FIG. 4. The memory mentioned anywhere above may be a read-only memory (read-only memory, ROM), another type of static storage device that can store static information and instructions, a random access memory (random access memory, RAM), or the like.

It may be clearly understood by a person skilled in the art that, for convenience and brevity of description, for explanations and beneficial effect of related content in any one of the communication apparatuses provided above, refer to the corresponding method embodiments provided above. Details are not described herein again.

In the several embodiments provided in this application, it should be understood that the disclosed system, apparatus, and method may be implemented in another manner. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, may be located at one location, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a ROM, a RAM, a magnetic disk, or an optical disc.

In conclusion, the foregoing embodiments are merely intended for describing the technical solutions of this application other than limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the scope of the technical solutions of embodiments of this application.

**Claims**

1. A communication method, wherein the method comprises:

   receiving, by a first apparatus, at least one quantization threshold from a second apparatus;
   performing, by the first apparatus, quantization on related information of a first model of the first apparatus based on the at least one quantization threshold; and
   sending, by the first apparatus, first information to the second apparatus, wherein the first information indicates quantized related information of the first model.

2. The method according to claim 1, wherein the related information of the first model comprises an output parameter or an update parameter of the first model, and the update parameter comprises a weight gradient or a weight parameter of the first model.

3. The method according to claim 1 or 2, wherein before the receiving, by a first apparatus, at least one quantization threshold from a second apparatus, the method further comprises:

   sending, by the first apparatus, second information to the second apparatus, wherein the second information indicates information obtained by processing the related information of the first model; or
   the second information indicates information obtained by processing related information obtained by performing an $M^{th}$ round of training on the first model by the first apparatus, and the related information of the first model is related information obtained by performing a $Q^{th}$ round of training on the first model by the first apparatus, wherein M is an integer greater than or equal to 1 and less than Q, and Q is an integer greater than 1.

4. The method according to claim 3, wherein the related information of the first model comprises the output parameter of the first model, and the information obtained by processing the related information of the first model comprises an average value of absolute values of values of output parameters of the first model; or
   the related information of the first model comprises the update parameter of the first model, and the information obtained by processing the related information of the first model comprises an average value of absolute values of values of update parameters of the first model.

5. The method according to any one of claims 1 to 4, wherein the method further comprises:
   receiving, by the first apparatus, third information from the second apparatus, wherein the third information indicates global information of the first model.

6. The method according to claim 5, wherein the global information of the first model comprises a global output parameter of the first model, or the global information of the first model comprises a global update parameter and/or a global learning rate of the first model.

7. The method according to any one of claims 1 to 6, wherein the related information of the first model comprises N parameters of the first model, and N is an integer greater than or equal to 1;
   the performing, by the first apparatus, quantization on related information of a first model of the first apparatus based on the at least one quantization threshold comprises:

   performing, by the first apparatus, quantization on the N parameters based on the at least one quantization threshold, to obtain N quantized parameters; and
   the first information comprises the N quantized parameters; and the sending, by the first apparatus, first information to the second apparatus comprises:

modulating, by the first apparatus, the N quantized parameters, to obtain N first signals; and
sending, by the first apparatus, the N first signals to the second apparatus.

8. The method according to claim 7, wherein the at least one quantization threshold comprises a first quantization threshold and a second quantization threshold; and the performing, by the first apparatus, quantization on the N parameters based on the at least one quantization threshold, to obtain N quantized parameters comprises:

if an $i^{th}$ parameter in the N parameters is greater than the first quantization threshold, quantizing, by the first apparatus, the $i^{th}$ parameter to a first value, wherein i is an integer greater than or equal to 1 and less than or equal to N; or
if an $i^{th}$ parameter in the N parameters is less than or equal to the first quantization threshold and is greater than or equal to the second quantization threshold, quantizing, by the first apparatus, the $i^{th}$ parameter to a second value; or
if an $i^{th}$ parameter in the N parameters is less than the second quantization threshold, quantizing, by the first apparatus, the $i^{th}$ parameter to a third value.

9. The method according to claim 7 or 8, wherein the modulating, by the first apparatus, the N quantized parameters, to obtain N first signals comprises:

modulating, by the first apparatus, an $i^{th}$ quantized parameter, to obtain an $i^{th}$ first signal, wherein the $i^{th}$ first signal corresponds to two sequences; and
when the $i^{th}$ quantized parameter is the first value, a transmit power at which the first apparatus sends a $1^{st}$ sequence in the two sequences is less than a transmit power at which the first apparatus sends a $2^{nd}$ sequence in the two sequences; when the $i^{th}$ quantized parameter is the second value, a transmit power at which the first apparatus sends a $1^{st}$ sequence in the two sequences is equal to a transmit power at which the first apparatus sends a $2^{nd}$ sequence in the two sequences; or when the $i^{th}$ quantized parameter is the third value, a transmit power at which the first apparatus sends a $1^{st}$ sequence in the two sequences is greater than a transmit power at which the first apparatus sends a $2^{nd}$ sequence in the two sequences.

10. The method according to claim 9, wherein when the $i^{th}$ quantized parameter is the first value, the $1^{st}$ sequence in the two sequences is a non-all-0 sequence, and the $2^{nd}$ sequence is an all-0 sequence; when the $i^{th}$ quantized parameter is the second value, the two sequences are both all-0 sequences; or when the $i^{th}$ quantized parameter is the third value, the $1^{st}$ sequence in the two sequences is an all-0 sequence, and the $2^{nd}$ sequence is a non-all-0 sequence.

11. The method according to any one of claims 1 to 10, wherein the sending, by the first apparatus, first information to the second apparatus comprises:
sending, by the first apparatus, the first information to the second apparatus L times, wherein L is an integer greater than or equal to 1.

12. The method according to claim 11, wherein the method further comprises:
receiving, by the first apparatus, first indication information from the second apparatus, wherein the first indication information indicates the quantity L of sending times that the first apparatus sends the first information to the second apparatus.

13. The method according to any one of claims 1 to 12, wherein the related information of the first model comprises N parameters of the first model that are obtained through quantization error compensation, the N parameters obtained through quantization error compensation are obtained by performing error compensation for the N parameters by the first apparatus based on quantization errors respectively corresponding to the N parameters obtained by performing the $Q^{th}$ round of training on the first model by the first apparatus, and a quantization error corresponding to the $i^{th}$ parameter in the N parameters is determined based on an $i^{th}$ parameter obtained by performing a $(Q-1)^{th}$ round of training on the first model and performing quantization error compensation by the first apparatus, wherein i is an integer greater than or equal to 1 and less than or equal to N, N is an integer greater than or equal to 1, and Q is an integer greater than 1.

14. The method according to any one of claims 1 to 13, wherein the related information of the first model comprises N parameters of the first model that are obtained through sparsification, the N parameters of the first model that are obtained through sparsification are N parameters selected by the first apparatus from K parameters of the first model based on a common sparse mask, and the K parameters of the first model are parameters obtained by performing one round of training on the first model by the first apparatus, wherein K is an integer greater than or equal to N, K is an integer greater than or equal to 1, and N is an integer greater than or equal to 1.

15. The method according to claim 14, wherein the common sparse mask is a bit sequence, the bit sequence comprises K bits, and the K bits one-to-one correspond to the K parameters; and when a value of one bit in the K bits is 0, it indicates the first apparatus not to select a parameter corresponding to the bit; or when a value of one bit in the K bits is 1, it indicates the first apparatus to select a parameter corresponding to the bit.

16. The method according to claim 14 or 15, wherein the common sparse mask is determined by the first apparatus based on a sparsity ratio and a pseudo-random number, and the sparsity ratio is indicated by the second apparatus to the first apparatus.

17. The method according to claim 14 or 15, wherein the method further comprises:
receiving, by the first apparatus, second indication information from the second apparatus, wherein the second indication information indicates the common sparse mask.

18. The method according to any one of claims 14 to 17, wherein the method further comprises:
sending, by the first apparatus, third indication information to the second apparatus, wherein the third indication information indicates indexes of N parameters whose absolute values of corresponding values are largest and that are in the K parameters.

19. The method according to any one of claims 1 to 18, wherein the first model is a neural network model, and the related information of the first model comprises related parameters of neurons at P layers of the neural network model, wherein P is an integer greater than or equal to 1.

20. A communication method, wherein the method comprises:

sending, by a second apparatus, at least one quantization threshold to a first apparatus, wherein the at least one quantization threshold is used to perform quantization on related information of a first model of the first apparatus; and
receiving, by the second apparatus, first information sent from the first apparatus, wherein the first information indicates quantized related information of the first model.

21. The method according to claim 20, wherein the related information of the first model comprises an output parameter or an update parameter of the first model, and the update parameter comprises a weight gradient or a weight parameter of the first model.

22. The method according to claim 20 or 21, wherein the method further comprises:

receiving, by the second apparatus, second information from the first apparatus, wherein the second information indicates information obtained by processing the related information of the first model; or
the second information indicates information obtained by performing an $M^{th}$ round of training on the first model and performing processing by the first apparatus, and the related information of the first model is related information obtained by performing a $Q^{th}$ round of training on the first model by the first apparatus, wherein M is an integer greater than or equal to 1 and less than Q, and Q is an integer greater than 1; and
determining, by the second apparatus, the at least one quantization threshold based on the second information.

23. The method according to claim 22, wherein the related information of the first model comprises the output parameter of the first model, and the information obtained by processing the related information of the first model comprises an average value of absolute values of values of output parameters of the first model; or
the related information of the first model comprises the update parameter of the first model, and the information obtained by processing the related information of the first model comprises an average value of absolute values of values of update parameters of the first model.

24. The method according to claim 22 or 23, wherein the method further comprises:

receiving, by the second apparatus, third information from a third apparatus, wherein the third information indicates information obtained by processing related information of a second model of the third apparatus, or the third information indicates information obtained by performing an $S^{th}$ round of training on the second model and performing processing by the third apparatus, and the related information of the second model is related information obtained by performing an $R^{th}$ round of training on the second model by the third apparatus, wherein S is an integer greater than or equal to 1 and less than R, and R is an integer greater than 1; and

the determining, by the second apparatus, the at least one quantization threshold based on the second information comprises:

determining, by the second apparatus, the at least one quantization threshold based on the second information and the third information.

25. The method according to any one of claims 20 to 24, wherein the method further comprises:

determining, by the second apparatus, global information of the first model based on the first information; and sending, by the second apparatus, fourth information to the first apparatus, wherein the fourth information indicates the global information of the first model.

26. The method according to claim 25, wherein the global information of the first model comprises a global output parameter of the first model, or the global information of the first model comprises a global update parameter and/or a global learning rate of the first model.

27. The method according to claim 25 or 26, wherein the method further comprises:

receiving, by the second apparatus, fifth information from the third apparatus, wherein the fifth information indicates the related information of the second model of the third apparatus; and

the determining, by the second apparatus, global information of the first model based on the first information comprises:

determining, by the second apparatus, the global information of the first model based on the first information and the fifth information.

28. The method according to claim 27, wherein the related information of the first model comprises N parameters of the first model, N is an integer greater than or equal to 1, the related information of the second model comprises N parameters of the second model, the first information comprises N quantized parameters of the first model, and the fifth information comprises N quantized parameters of the second model;

the receiving, by the second apparatus, first information sent from the first apparatus comprises:

receiving, by the second apparatus, N first signals from the first apparatus, wherein the N first signals carry the N quantized parameters of the first model, and the N first signals one-to-one correspond to the N quantized parameters of the first model;

the receiving, by the second apparatus, fifth information from the third apparatus comprises:

receiving, by the second apparatus, N second signals from the third apparatus, wherein the N second signals carry the N quantized parameters of the second model, and the N second signals one-to-one correspond to the N quantized parameters of the second model; and

the determining, by the second apparatus, the global information of the first model based on the first information and the fifth information comprises:

determining, by the second apparatus, the global information of the first model based on the N first signals and the N second signals.

29. The method according to claim 28, wherein an $i^{th}$ first signal in the N first signals corresponds to a first sequence and a second sequence, an $i^{th}$ second signal in the N second signals corresponds to a third sequence and a fourth sequence, a time-frequency resource used by the first apparatus to send the first sequence is the same as a time-frequency resource used by the third apparatus to send the third sequence, a time-frequency resource used by the first apparatus to send the second sequence is the same as a time-frequency resource used by the third apparatus to send the fourth sequence, and the global information of the first model comprises N global parameters of the first model, wherein i is an integer greater than or equal to 1 and less than or equal to N; and

the determining, by the second apparatus, the global information of the first model based on the N first signals and the N second signals comprises:

determining, by the second apparatus, a first signal energy sum of the first sequence and the third sequence that are received by the second apparatus;

determining, by the second apparatus, a second signal energy sum of the second sequence and the fourth sequence that are received by the second apparatus; and

determining, by the second apparatus, an $i^{th}$ global parameter in the N global parameters based on the first signal energy sum and the second signal energy sum.

30. The method according to claim 29, wherein the determining, by the second apparatus, an $i^{th}$ global parameter in the N global parameters based on the first signal energy sum and the second signal energy sum comprises:

if a sum of the first signal energy sum and a decision threshold is less than the second signal energy sum, determining, by the second apparatus, a value of the $i^{th}$ global parameter as a first value; or

if a sum of the first signal energy sum and the decision threshold is greater than or equal to the second signal energy sum, and a sum of the second signal energy sum and the decision threshold is greater than or equal to the first signal energy sum, determining, by the second apparatus, a value of the $i^{th}$ global parameter as a second value; or

if a sum of the second signal energy sum and the decision threshold is less than the first signal energy sum, determining, by the second apparatus, a value of the $i^{th}$ global parameter as a third value.

31. The method according to any one of claims 20 to 30, wherein the method further comprises:

sending, by the second apparatus, first indication information to the first apparatus, wherein the first indication information indicates a quantity L of sending times that the first apparatus sends the first information to the second apparatus, wherein L is an integer greater than or equal to 1.

32. The method according to any one of claims 20 to 31, wherein the method further comprises:

sending, by the second apparatus, second indication information to the first apparatus, wherein the second indication information indicates a common sparse mask, and the common sparse mask indicates the first apparatus to report some parameters obtained by training the first model by the first apparatus.

33. The method according to claim 32, wherein the method further comprises:

receiving, by the second apparatus, third indication information from the first apparatus, wherein the third indication information indicates indexes of N parameters whose absolute values of corresponding values are largest and that are in K parameters obtained by performing one round of training on the first model by the first apparatus;

receiving, by the second apparatus, fourth indication information from the third apparatus, wherein the fourth indication information indicates indexes of N parameters whose absolute values of corresponding values are largest and that are in K parameters of the second model of the third apparatus, and the K parameters of the second model are K parameters obtained by performing one round of training on the second model by the third apparatus; and

determining, by the second apparatus, the common sparse mask based on the third indication information and the fourth indication information.

34. A communication method, wherein the method comprises:

sending, by a first apparatus, first indication information to a second apparatus, wherein the first indication information indicates indexes of N parameters whose absolute values of corresponding values are largest and that are in K parameters of a first model of the first apparatus, and the K parameters of the first model are K parameters obtained by performing one round of training on the first model by the first apparatus, wherein K is an integer greater than or equal to N, K is an integer greater than or equal to 1, and N is an integer greater than or equal to 1; and

receiving, by the first apparatus, second indication information from the second apparatus, wherein the second indication information indicates a common sparse mask, the common sparse mask is determined by the second apparatus based on the first indication information, and the common sparse mask indicates the first apparatus to report some parameters obtained by training the first model by the first apparatus.

35. A communication method, wherein the method comprises:

receiving, by a second apparatus, first indication information from a first apparatus, wherein the first indication information indicates indexes of N parameters whose absolute values of corresponding values are largest and that are in K parameters of a first model of the first apparatus, and the K parameters of the first model are K parameters obtained by performing one round of training on the first model by the first apparatus, wherein K is an integer greater than or equal to N, K is an integer greater than or equal to 1, and N is an integer greater than or equal to 1;

determining, by the second apparatus, a common sparse mask based on the first indication information, wherein the common sparse mask indicates the first apparatus to report some parameters obtained by training the first model by the first apparatus; and

sending, by the second apparatus, second indication information to the first apparatus, wherein the second indication information indicates the common sparse mask.

36. The method according to claim 35, wherein the method further comprises:

receiving, by the second apparatus, third indication information from a third apparatus, wherein the third indication information indicates indexes of N parameters whose absolute values of corresponding values are largest and that are in K parameters of a second model of the third apparatus, and the K parameters of the second model are K parameters obtained by performing one round of training on the second model by the third apparatus; and

the determining, by the second apparatus, a common sparse mask based on the first indication information comprises:

determining, by the second apparatus, the common sparse mask based on the first indication information and the third indication information.

37. A first apparatus, wherein the first apparatus comprises a transceiver module and a processing module, the transceiver module is configured to perform a receiving or sending operation according to any one of claims 1 to 19, and the processing module is configured to perform a processing operation according to any one of claims 1 to 19.

38. A first apparatus, wherein the first apparatus comprises a transceiver module, and the transceiver module is configured to perform a receiving or sending operation according to claim 34.

39. A second apparatus, wherein the second apparatus comprises a transceiver module, and the transceiver module is configured to perform a receiving or sending operation according to any one of claims 20 to 33.

40. The second apparatus according to claim 39, wherein the second apparatus further comprises a processing module, and the processing module is configured to perform a processing operation according to any one of claims 20 to 33.

41. A second apparatus, wherein the second apparatus comprises a transceiver module and a processing module, the transceiver module is configured to perform a receiving or sending operation according to claim 35 or 36, and the processing module is configured to perform a processing operation according to claim 35 or 36.

42. An apparatus, wherein the apparatus comprises a processor; and the processor is configured to execute a computer program or computer instructions in a memory, to perform the method according to any one of claims 1 to 19; or the processor is configured to execute a computer program or computer instructions in the memory, to perform the method according to any one of claims 20 to 33; or the processor is configured to execute a computer program or computer instructions in the memory, to perform the method according to claim 34; or the processor is configured to execute a computer program or computer instructions in the memory, to perform the method according to claim 35 or 36.

43. The apparatus according to claim 42, wherein the apparatus further comprises the memory.

44. A computer-readable storage medium, wherein the computer-readable storage medium stores a computer program, and when the computer program is executed by an apparatus, the apparatus is enabled to perform the method according to any one of claims 1 to 19, or the apparatus is enabled to perform the method according to any one of claims 20 to 33, or the apparatus is enabled to perform the method according to claim 34, or the apparatus is enabled to perform the method according to claim 35 or 36.

45. A computer program product, wherein when the computer program product runs on a computer, the computer is enabled to perform the method according to any one of claims 1 to 19, or the computer is enabled to perform the method according to any one of claims 20 to 33, or the computer is enabled to perform the method according to claim 34, or the computer is enabled to perform the method according to claim 35 or 36.

FIG. 1

| Third apparatus | First apparatus | Second apparatus |
|---|---|---|

201d: First indication information (indicating a quantity L of sending times that the first apparatus sends first information to the second apparatus)

201e: Second indication information (indicating a common sparse mask)

201a: Second information

201c: Third information

201b: Determine at least one quantization threshold based on the second information

201: At least one quantization threshold

202b: Select N parameters from K parameters of a first model based on the common sparse mask, to obtain N parameters of the first model that are obtained through sparsification

202a: Perform error compensation for the N parameters based on quantization errors respectively corresponding to the N parameters of the first model, to obtain N parameters obtained through error compensation

202: Perform quantization on related information of the first model of the first apparatus based on the at least one quantization threshold

203a: Fifth information (indicating quantized related information of a second model)

203: First information (indicating quantized related information of the first model)

204: Determine global information of the first model based on the first information

205: Fourth information (indicating the global information of the first model that is determined by the second apparatus)

FIG. 2

FIG. 3

EP 4 576 691 A1

| First apparatus | Second apparatus | Third apparatus |
|---|---|---|

401: Third indication information (indicating indexes of N parameters whose absolute values of corresponding values are largest and that are in K parameters obtained by performing one round of training on a first model by the first apparatus)

402: Fourth indication information (indicating indexes of N parameters whose absolute values of corresponding values are largest and that are in K parameters of a second model of the second apparatus)

403: Determine a common sparse mask based on the third indication information and the fourth indication information

FIG. 4

First terminal device

| 1 | 1 | 0 |
|---|---|---|
| 0 | 1 | 0 |
| 1 | 0 | 0 |

**+**

Second terminal device

| 1 | 0 | 1 |
|---|---|---|
| 0 | 0 | 0 |
| 1 | 0 | 1 |

**+**

Third terminal device

| 1 | 1 | 0 |
|---|---|---|
| 0 | 0 | 1 |
| 0 | 0 | 1 |

**=**

Network device

| 1 | 1 | 0 |
|---|---|---|
| 0 | 0 | 0 |
| 1 | 0 | 1 |

FIG. 5

First apparatus 600

601

602

| Transceiver module | Processing module |
|---|---|

FIG. 6

First apparatus 700

701

702

Transceiver module

Processing module

FIG. 7

Second apparatus 800

801

802

Transceiver module

Processing module

FIG. 8

Second apparatus 900

901

902

Transceiver module

Processing module

FIG. 9

FIG. 10

11100

11101

Antenna

11102

Radio frequency unit

1100

CU and DU

AAU

Board

11201

11202

Memory

Processor

11200

FIG. 11

# INTERNATIONAL SEARCH REPORT

| | International application No. |
|---|---|
| | **PCT/CN2022/119814** |

**A. CLASSIFICATION OF SUBJECT MATTER**

H04L27/00(2006.01)i

According to International Patent Classification (IPC) or to both national classification and IPC

**B. FIELDS SEARCHED**

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNTXT, ENTXT, VEN: 人工智能, 神经网络, 模型, 训练, 分布式学习, 传输, 压力, 量化, 稀疏, 参数, 平均, AI, neural network, model, train, distribute, learn, transmit, pressure, quantization, sparse, parameter, average

**C. DOCUMENTS CONSIDERED TO BE RELEVANT**

| Category* | Citation of document, with indication, where appropriate, of the relevant passages | Relevant to claim No. |
|---|---|---|
| X | CN 114301573 A (SUPER TELECOM CO., LTD. et al.) 08 April 2022 (2022-04-08) description, paragraphs [0060]-[0075], and figure 3 | 1-33, 37, 39-40, 42-45 |
| Y | CN 114301573 A (SUPER TELECOM CO., LTD. et al.) 08 April 2022 (2022-04-08) description, paragraphs [0060]-[0075], and figure 3 | 34-36, 38, 41 |
| Y | CN 114692844 A (ZHONGKE CAMBRICON TECHNOLOGY CO., LTD.) 01 July 2022 (2022-07-01) description, paragraph [0003] | 34-36, 38, 41 |
| A | CN 113887746 A (XINZHI WOLAI NETWORK TECHNOLOGY CO., LTD.) 04 January 2022 (2022-01-04) entire document | 1-45 |
| A | WO 2021053381 A1 (BYTEDANCE INC.) 25 March 2021 (2021-03-25) entire document | 1-45 |

☐ Further documents are listed in the continuation of Box C.  ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **30 March 2023** | **18 April 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

## INTERNATIONAL SEARCH REPORT
### Information on patent family members

International application No.

**PCT/CN2022/119814**

| Patent document cited in search report | | | Publication date (day/month/year) | Patent family member(s) | | | Publication date (day/month/year) |
|---|---|---|---|---|---|---|---|
| CN | 114301573 | A | 08 April 2022 | None | | | |
| CN | 114692844 | A | 01 July 2022 | WO | 2022134872 | A1 | 30 June 2022 |
| CN | 113887746 | A | 04 January 2022 | None | | | |
| WO | 2021053381 | A1 | 25 March 2021 | CN | 110659725 | A | 07 January 2020 |

Form PCT/ISA/210 (patent family annex) (July 2022)